(19) Europäisches Patentamt
European Patent Office
Office européen des brevets

(11) **EP 2 395 556 B1**

(12) **EUROPÄISCHE PATENTSCHRIFT**

(45) Veröffentlichungstag und Bekanntmachung des Hinweises auf die Patenterteilung:
**09.08.2017 Patentblatt 2017/32**

(51) Int Cl.:
***H01L 31/042*** *(2014.01)*

(21) Anmeldenummer: **11004679.4**

(22) Anmeldetag: **08.06.2011**

(54) **Anschlussdose, Solarpaneel und Verfahren zum Erzeugen eines Dreiphasenstroms**

Connection socket, solar panel and method for generating a three phase current

Boîtier de raccordement, panneau solaire et procédé de production d'un courant triphasé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.06.2010 DE 102010023084**

(43) Veröffentlichungstag der Anmeldung:
**14.12.2011 Patentblatt 2011/50**

(73) Patentinhaber: **Yamaichi Electronics Deutschland GmbH**
**85609 Aschheim-Dornach (DE)**

(72) Erfinder: **Dirk, Michel**
**85716 Unterschleißheim (DE)**

(74) Vertreter: **Müller-Boré & Partner**
**Patentanwälte PartG mbB**
**Friedenheimer Brücke 21**
**80639 München (DE)**

(56) Entgegenhaltungen:
**DE-A1- 4 032 569        US-A1- 2002 038 667**
**US-A1- 2003 111 103**

EP 2 395 556 B1

**Beschreibung**

Die Erfindung betrifft eine Anschlußdose, ein Solarpaneel, eine Verwendung der Anschlußdose, eine Anordnung und ein Verfahren zum Erzeugen eines Dreiphasenstroms.

Herkömmliche Solarpaneele zur Erzeugung elektrischer Energie aus Sonnenlicht umfassen eine oder mehrere Solarzellengruppen, in denen je nach gewünschter von der Solarzellengruppe zur Verfügung zu stellenden Spannung und/oder Stromstärke einzelne Solarzellen parallel und/oder in Reihe geschaltet sind. Die elektrischen Anschlüsse der Solarzellengruppen des Solarmoduls werden nach außen geführt und mittels einer Anschlußdose in Form einer Gleichspannung bzw. eines Gleichstroms bereitgestellt. Abhängig von der auf das Solarpaneel wirkenden Bestrahlungsintensität durch Sonnenlicht, kann das Solarpaneel eine unterschiedliche elektrische Leistung zur Verfügung stellen.

Die Anschlußdose weist in der Regel Anschlußpole auf, an denen ein elektrischer Gleichstromverbraucher in Regel über Akkumulatoren oder ein elektrischer Wechselstromverbraucher über einen Wechselrichter angeschlossen werden kann. Mit anderen Worten sind je nach der Art des angeschlossenen elektrischen Verbrauchers unterschiedliche weitere Bauelemente notwendig, die zwischen der Anschlußdose und dem elektrischen Verbraucher geschaltet werden müssen.

Die Druckschrift DE 40 32 569 A1 offenbart eine netzgekoppelte Photovoltaikanlage mit einem Solargenerator, welcher eine Vielzahl von Solarpaneelen umfaßt, wobei jedes Solarpaneel einen integrierten Wechselrichter zum Umwandeln der erzeugten Gleichspannung in Wechselspannung umfaßt. Die von den Solarpaneelen erzeugten Wechselspannungen werden in einer Zentraleinheit zu einem Drehstrom zusammengeführt.

Es ist Aufgabe der Erfindung, eine elektrische Anschlußdose und ein Solarpaneel bereitzustellen, welche auf vereinfachte Weise eine zuverlässige Stromversorgung von unterschiedlichen angeschlossenen Verbraucher ermöglichen.

Die Aufgabe wird durch die unabhängigen Ansprüche gelöst. Bevorzugte Ausführungsformen sind Gegenstand der abhängigen Ansprüche.

Anschlußdose gemäß einem Aspekt

Ein Aspekt der vorliegenden Erfindung betrifft eine Anschlußdose für ein Solarmodul, wobei die Anschlußdose drei Anschlußpole und zumindest eine Wandlervorrichtung aufweist, wobei die zumindest eine Wandlervorrichtung

- drei Stellglieder,
  wobei jedes der drei Stellglieder einen ersten elektrischen Leiterkontakt, einen zweiten elektrischen Leiterkontakt und einen Anschlußpolkontakt aufweist, wobei jeder der ersten elektrischen Leiterkontakte und jeder der zweiten elektrischen Leiterkontakte mit einem zugeordneten elektrischen Leiter des Solarmoduls elektrisch kontaktierbar ist, und
  wobei jeder der drei Anschlußpolkontakte mit einem zugeordneten Anschlußpol elektrisch verbunden ist; und
- eine Regeleinrichtung, welche mit jedem der drei Stellglieder elektrisch verbunden ist,
  wobei das n-te der drei Stellglieder mit $n \in [1...3]$ einen über eine Zeit t vorgegebenen elektrischen Eingangsstrom $I_E^n(t)$ in einen durch die Regeleinrichtung vorbestimmbaren zeitlich variablen Ausgangsstrom $I_A^n(t)$ konvertiert, welcher an dem n-ten Anschlußpol bereitstellbar ist,
  wobei der n-te Anschlußpol dem n-ten Stellglied zugeordnet ist und
  wobei der Eingangsstrom $I_E^n(t)$ über die ersten und zweiten elektrischen Leiterkontakte dem n-ten der drei Stellglieder zugeführt wird, oder
  wobei das n-te der drei Stellglieder mit $n \in [1...3]$ eine über die Zeit t vorgegebene elektrische Eingangsspannung $U_E^n(t)$ in eine durch die Regeleinrichtung vorbestimmbare zeitlich variable Ausgangsspannung $U_A^n(t)$ konvertiert, welche an dem n-ten Anschlußpol bereitstellbar ist,
  wobei der n-te Anschlußpol dem n-ten Stellglied zugeordnet ist und
  wobei die Eingangsspannung $U_E^n(t)$ über die ersten und zweiten elektrischen Leiterkontakte an dem n-ten der drei Stellglieder anliegt,

umfaßt.

Die drei Anschlußpole sind ausgelegt, ein an die Anschlußdose angeschlossenes Solarmodul mit einem elektrischen Verbraucher zu verbinden. Im Betrieb kann über den n-ten der drei Anschlußpole jeweils ein nach außen wirksamer, von dem zugeordneten n-ten Stellglied bereitgestellter zeitlich variabler Ausgangsstrom $I_A^n(t)$ fließen. Vorteilhafterweise sind die Stellglieder und die Regeleinrichtung innerhalb eines Gehäuses der Anschlußdose angeordnet, so daß ein aus dem Solarmodul und dem Anschlußdose ausgebildetes Solarpaneel unmittelbar als Stromversorgungseinheit für einen Verbraucher eingesetzt werden kann.

Vorteilhafterweise sind zeitlich variable Ausgangsströme in einfacher Weise durch Transformatoren umspannbar. Vorteilhafterweise kann der Regeleinrichtung ein gewünschter bzw. vorbestimmter Ausgangsstrom $I_G^n(t)$ und/oder eine gewünschte bzw. vorbestimmte Ausgangsspannung $U_G^n(t)$ vorgegeben werden, welche an die Erfordernisse des an die Anschlußpole angeschlossenen Verbrauchers angepaßt sind. Die Regeleinrichtung kann beispielsweise den gewünschten Ausgangsstrom $I_G^n(t)$ bzw. die gewünschte Ausgangsspannung $U_G^n(t)$ speichern, beispielsweise in einer Speichereinrichtung der Regeleinrichtung oder durch eine feste Verdrahtung bzw. Schaltung. Die Regeleinrichtung kann vorteilhafterweise die von den drei Stellgliedern bereitgestellten Ausgangsströme $I_A^n(t)$ derart bestimmen bzw. den drei Stellgliedern vorgeben, daß die Ausgangsströme $I_A^n(t)$ den gewünschten bzw. vorbestimmten Ausgangsströme $I_G^n(t)$ entsprechen. Dementsprechend kann die Regeleinrichtung die von den drei Stellgliedern bereitgestellten Ausgangs-spannungen $U_A^n(t)$ derart bestimmen bzw. den drei Stellgliedern vorgeben, daß die Ausgangsspannungen $U_A^n(t)$ den gewünschten Ausgangsspannungen $U_G^n(t)$ entsprechen.

Das Entsprechen im Sinne der Erfindung umfaßt eine geringe Abweichung des tatsächlich bereitgestellten Ausgangsstroms $I_A^n(t)$ von dem gewünschten Ausgangsstrom $I_G^n(t)$ von weniger als 10 Prozent oder bevorzugt weniger als 5 Prozent der maximalen gewünschten Ausgangsstromstärke. Als geringe Abweichung kann angesehen werden, wenn die Differenz zwischen dem gewünschten und dem tatsächlichen Ausgangsstrom $|I_G^n(t) - I^n(t)|$ kleiner als etwa 100 mA, bevorzugt kleiner als etwa 50 mA, insbesondere kleiner als etwa 10 mA zu jedem Zeitpunkt t ist.

Analog umfaßt das Entsprechen im Sinne der Erfindung eine geringe Abweichung der tatsächlich bereitge-stellten Ausgangsspannung $U_A^n(t)$ von der gewünschten Gesamtausgangsspannung $U_G^n(t)$ von weniger als 10 Prozent oder bevorzugt weniger als 5 Prozent der maximalen gewünschten Ausgangsspannung. Als geringe Abweichung kann angesehen werden, wenn die Differenz zwischen der gewünschten und der tatsächlichen Ausgangsspannung $|U_G^n(t) - U_A^n(t)|$ kleiner als etwa 5 V, bevorzugt kleiner als etwa 2 V, insbesondere kleiner als etwa 1 V zu jedem Zeitpunkt t ist.

Vorteilhafterweise ist durch die Regeleinrichtung den drei Stellgliedern jeweils ein beliebiger zeitlich variabler Ausgangsstrom $I_A^n(t)$ mit $n \in [1...3]$ vorgebbar, also insbesondere auch ein Wechselstrom, welcher an dem zugeordneten Anschlußpol der Anschlußdose bereitgestellt werden kann. Die Zahl n ist eine natürliche Zahl von 1 bis 3, also 1, 2, und 3. Dementsprechend kann vorteilhafterweise den drei Stellgliedern eine zeitlich variablen Ausgangsspannung $U_A^n(t)$ mit $n \in [1...N]$ durch die Regeleinrichtung vorgegeben werden. Daher können vorteilhafterweise Verbraucher an die Anschlußpole angeschlossen werden, welche einen Dreiphasenstrom bzw. eine Dreiphasenspannung benötigen. Weiter können auch Verbraucher an zwei der Anschlußpole angeschlossen werden, welche einen Einphasenstrom bzw. eine Einphasenspannung benötigen. Vorteilhafterweise können an die erfindungsgemäße Anschlußdose Verbraucher mit verschiedenen Ansprüchen bezüglich der Strom- bzw. Spannungsversorgung an die Anschlußpole angeschlossen werden.

Jeder der Anschlußpolkontakte der Stellglieder ist mittelbar oder unmittelbar mit dem zugeordneten Anschlußpol elektrisch verbunden. Die Anschlußdose umfaßt drei Anschlußpole und jede der zumindest einen Wandlervorrichtungen der Anschlußdose umfaßt drei Stellglieder, so daß eine eineindeutige Zuordnung der Stellglieder einer Wandlervorrichtung zu einem der drei Anschlußpole erfolgen kann, das heißt, daß jedem Stellglied genau ein einziger Anschlußpol zugeordnet ist.

Ein Stellglied im Sinne der Erfindung kann ein Gleichstromsteller oder ein Gleichspannungswandler, jeweils auch DC-DC-Wandler genannt, umfassen bzw. sein. Das Stellglied dient zur Strom- bzw. Spannungsübersetzung und/oder Spannungs- bzw. Stromregelung, beispielsweise mit Hilfe eines periodisch arbeitenden elektronischen Schalters und einem Energiespeicher. Der Energiespeicher kann eine Induktivität, beispielsweise eine Spule oder ein Wandler-Transformator, oder eine Kapazität, beispielsweise einen Kondensator, umfassen. Als elektronischer Schalter können beispielsweise Leistungs-MOSFET, IGBTs und Thyristoren zum Einsatz kommen. Damit die Polarität des von dem Stellglied gewandelten und bereitgestellten Ausgangsstroms bzw. die Polarität der Ausgangsspannung wechseln kann, kann ein Stellglied eine Kombination aus mehreren Gleichstromstellern umfassen. Mit anderen Worten kann dann Stellglied als Zweiquadrantensteller oder als Vierquadrantensteller ausgebildet sein.

Jedes Stellglied weist einen ersten elektrischen Leiterkontakt und einen zweiten elektrischen Leiterkontakt auf. Der erste und der zweite elektrische Leiterkontakt ist mit den zugeordneten elektrischen Leitern einer oder mehreren zugeordneten Solarzellengruppe(n) des Solarmoduls kontaktierbar. Der Begriff "Kontakt" bzw. "kontaktieren" im Sinne der vorliegenden Erfindung beinhaltet insbesondere einen elektrischen und/oder mechanischen Kontakt. Insbesondere können die zugeordneten elektrischen Leiter der zugeordneten Solarzellengruppe(n) des Solarmoduls an dem ersten und/oder dem zweiten elektrischen Leiterkontakt befestigt werden, beispielsweise festgelötet, geklemmt, geschraubt, usw.. Dabei kann der elektrische Kontakt unmittelbar oder mittelbar über weitere elektrisch leitfähige Bauteile erfolgen. Bevorzugt können die ersten elektrischen Leiterkontakte aller drei Stellglieder miteinander elektrisch verbunden sein, insbesondere wenn die ersten elektrischen Leiterkontakte mit dem Solarmodul verbunden sind. Dementsprechend können die zweiten elektrischen Leiterkontakte aller drei Stellglieder miteinander elektrisch verbunden sein, insbesondere wenn die zweiten elektrischen Leiterkontakte mit dem Solarmodul verbunden sind. Ebenfalls können die ersten und zweiten elektrischen Leiterkontakte der drei Stellglieder alternierend miteinander elektrisch verbunden sein, insbesondere wenn die ersten und zweiten elektrischen Leiterkontakte mit dem Solarmodul verbunden sind.

Die Regeleinrichtung ist mit jedem der drei Stellglieder der zumindest einen Wandlervorrichtung elektrisch verbunden, um die Stellglieder zu regeln oder zu steuern. Dabei kann die Regeleinrichtung jedem der drei Stellglieder vorgeben, welcher Ausgangsstrom $I_A^n(t)$ bzw. welche Ausgangsspannung $U_A^n(t)$ das n-te der drei Stellglieder zu einem Zeitpunkt t bereitstellen soll. Jedes der drei Stellglieder konvertiert dann den von der bzw. den zugeordneten Solarzellengruppe(n) des Solarmoduls erzeugten elektrischen Eingangsstrom $I_E^n(t)$, welcher über die zugeordneten ersten und zweiten elektrischen Leiterkontakte dem n-ten der drei Stellglieder bereitgestellt wird, in den durch die Regeleinrichtung vorbestimmbaren Ausgangsstrom $I_A^n(t)$. Der von dem n-ten Stellglied konvertierte Ausgangsstrom $I_A^n(t)$ kann zeitlich variabel und insbesondere periodisch sein. Zeitlich variabel im Sinne der Erfindung bedeutet, daß der von dem n-ten Stellglied konvertierte Ausgangsstrom $I_A^n(t)$ nicht zeitlich konstant ist, also nicht nur lediglich geringe Schwankungen beispielsweise aufgrund einer wechselnden auf die Solarzellengruppe treffende Bestrahlungsintensität aufweist. Insbesondere kann der zeitliche Verlauf innerhalb eines Zeitintervalls von einer Stunde oder einer Minute eine Mehrzahl von Schaltereignissen aufweisen, bei denen der von dem n-ten Stellglied konvertierte Ausgangsstrom $I_A^n(t)$ innerhalb einer Schaltzeit um mehr als etwa 10 Prozent, bevorzugt um mehr als etwa 50 Prozent, insbesondere um etwa 100 Prozent erhöht oder verringert wird. Insbesondere kann sich der konvertierte Ausgangsstrom $I_A^n(t)$ innerhalb einer Schaltzeit zwischen Null und etwa 100 Prozent eines vorbestimmten maximalen Ausgangsstrom ändern. Die Schaltzeit kann dabei bevorzugt kleiner als 1 s, weiter bevorzugt kleiner als 100 ms und insbesondere kleiner als 10 ms sein.

Alternativ oder zusätzlich kann die zeitliche Variabilität des von dem n-ten Stellglied konvertierten Ausgangsstroms $I_A^n(t)$ auch durch das Leistungsdichtespektrum des Ausgangsstroms $|I_A^n(f)|$ mit der Frequenz f beschrieben werden. Das Leistungsdichtespektrum des eines zeitlich variablen Ausgangsstroms $I_A^n(t)$ ist derart frequenzmäßig begrenzt, daß zumindest 50 Prozent, bevorzugt zumindest 90 Prozent, der elektrischen Leistung bei Frequenzen f größer als 10 mHz (also Perioden kleiner als 100 s), bevorzugt bei Frequenzen f größer als 100 mHz (also Perioden kleiner als 10 s), bereitgestellt wird. Insbesondere kann der zeitlich variable Ausgangsstroms $I_A^n(t)$ in seinem Leistungsdichtespektrum frequenzmäßig begrenzt sein, so daß zumindest 50 Prozent, bevorzugt zumindest 90 Prozent, der elektrischen Leistung bei Frequenzen f größer als 1 kHz (also Perioden kleiner als 1 ms), bevorzugt bei Frequenzen f größer als 10 kHz (also Perioden kleiner als 0,1 ms), bereitgestellt wird.

Das Solarmodul, welches ausgelegt ist, mit der Anschlußdose zu kontaktieren, weist zumindest zwei elektrische Leiterpaare auf, wobei jedes Leiterpaar mit einer zugeordneten Solarzellengruppe elektrisch verbunden ist, so daß an den zwei elektrischen Leitern des Leiterpaares die von der Solarzellengruppe erzeugte elektrische Leistung bereitgestellt wird. Ein Leiter jedes Leiterpaares ist mit einem zugeordneten ersten elektrischen Leiterkontakt eines zugeordneten der drei Stellglieder elektrisch mittelbar oder unmittelbar verbindbar, während der andere Leiter jedes Leiterpaares mit einem zugeordneten zweiten elektrischen Leiterkontakt eines zugeordneten der drei Stellglieder elektrisch mittelbar oder unmittelbar verbindbar ist. Entsprechend ist jedes der drei Stellglieder mit einer zugeordneten Solarzellengruppe des Solarmoduls elektrisch kontaktierbar. Die Zuordnung der drei Stellglieder zu den Solarzellengruppen des Solarmoduls muß dabei nicht eineindeutig sein. Beispielsweise kann eine Solarzellengruppe einem, zwei oder drei Stellgliedern zugeordnet sein. Weiter beispielsweise kann ein Stellglied einer, mehreren oder allen Solarzellengruppen des Solarmoduls zugeordnet sein.

Jedes der drei Stellglieder weist eine zugeordneten ersten und einen zugeordneten zweiten Leiterkontakt auf, so daß in Abhängigkeit von der auf die Solarzellengruppe des Solarmoduls wirkenden Bestrahlungsintensität eine elektrische Eingangsspannung $U_E^n(t)$ an dem n-ten der drei Stellglieder anliegt. Gemäß der Strom-Spannungs-Kennlinie der Solarzellengruppe fließt ein elektrischer Eingangsstrom $I_E^n(t)$, so daß dem zugeordneten Stellglied die Eingangsleistung $P_E^n(t)$ zur Verfügung gestellt wird. Da die Strom-Spannungs-Kennlinie des Solarmoduls nichtlinear ist, ergibt sich in Abhängigkeit von den Betriebsbedingungen, wie beispielsweise der Temperatur des Solarmoduls im Betrieb, für eine bestimmtes Spannungs-Stromstärken-Wertepaar eine maximale Eingangsleistung $P_{E,max}^n$. Dieses Spannungs-Stromstärken-Wertepaar mit maximaler Eingangsleistung ist der optimale Arbeitspunkt des Solarmoduls.

Bevorzugt ist jedes n-te der drei Stellglieder ausgelegt, den Innenwiderstand des n-ten Stellglieds zwischen den mit der zugeordneten Solarzellengruppe verbundenen elektrischen Leiterkontakten zu regeln, so daß die Eingangsspannung $U_E^n(t)$ in Abhängigkeit einer bekannten Strom-Spannungs-Kennlinie des Solarmoduls einen elektrischer Eingangsstrom $I_E^n(t)$ bewirkt, so daß die Differenz zwischen der tatsächlichen Eingangsleistung $P_E^n(t)$ und der maximalen Eingangsleistung $P_{E,max}^n$ minimal bzw. Null ist. Mit anderen Worten ist jedes Stellglied ausgelegt, die zugeordnete Solarzellengruppe stets im optimalen Arbeitspunkt betreiben zu können.

Das n-te Stellglied konvertiert den Eingangsstrom $I_E^n(t)$ bzw. die Eingangsspannung $U_E^n(t)$ zu dem Ausgangsstrom $I_A^n(t)$ bzw. der Ausgangsspannung $U_A^n(t)$. Eine gegebenenfalls überschüssige elektrische Energie, welche nicht an den zugeordneten Anschlußpolen bereitgestellt wird, kann durch das n-te Stellglied bzw. durch eine mit dem n-ten Stellglied verbundene elektrische Speichereinrichtung, beispielsweise ein Kondensator oder eine Induktivität, gespeichert werden.

Vorteilhafterweise kann sowohl ein an die Anschlußdose bzw. an das Solarpaneel angeschlossener elektrischer Verbraucher mit einem elektrischen Strom in gewünschter Art, Stärke und/oder Spannung versorgt werden als auch jede der Solarzellengruppen des Solarmoduls gemäß der Strom-Spannungs-Kennlinien unter Bedingungen (optimaler Arbeitspunkt) betrieben werden, so daß das Solarmodul die maximale elektrische Leistung bereitstellen kann. Insbesondere können zum einen abgeschattete Solarzellengruppen des Solarmoduls, die im Gegensatz zu nicht abgeschatteten Solarzellengruppen eine sehr viel geringere Leistung erzeugen können, weiter in einem optimalen Arbeitspunkt, nämlich dem unter der Bedingung der Abschattung, betrieben werden und zum anderen kann auf die Verwendung einer Bypass-Schaltung mittels einer Bypass-Diode verzichtet werden.

Es versteht sich, daß die oben beschriebene Ausführungsform mit drei Anschlußpolen und drei Stellgliedern zum Erzeugen eines Dreiphasenstroms bevorzugt auch zu Ausführungsformen erweitert werden kann, welche mehr als drei Stellglieder aufweist, beispielsweise 4, 5, 6, 7, 8, 9, 10 oder mehr Stellglieder, wobei insbesondere ein Strom mit 4, 5, 6, 7, 8, 9, 10 oder mehr Phasen erzeugt werden kann.

Eine Alternative, welche nicht Gegenstand der Ansprüche ist, betrifft eine Anschlußdose für ein Solarmodul, wobei die Anschlußdose drei Anschlußpole und zumindest eine Wandlervorrichtung aufweist,

wobei die zumindest eine Wandlervorrichtung drei Stellglieder umfaßt,

wobei jedes der drei Stellglieder einen ersten elektrischen Leiterkontakt, einen zweiten elektrischen Leiterkontakt und einen Anschlußpolkontakt aufweist,

wobei jeder der ersten elektrischen Leiterkontakte und jeder der zweiten elektrischen Leiterkontakte mit einem zugeordneten elektrischen Leiter des Solarmoduls elektrisch kontaktierbar ist,

wobei jeder der drei Anschlußpolkontakte mit einem zugeordneten Anschlußpol elektrisch verbunden ist;

wobei jedes der drei Stellglieder mit einer externen Regeleinrichtung verbindbar ist,

wobei das n-te der drei Stellglieder mit $n \in [1...3]$ einen über eine Zeit t vorgegebenen elektrischen Eingangsstrom $I_E^n(t)$ in einen durch die Regeleinrichtung vorbestimmbaren zeitlich variablen Ausgangsstrom $I_A^n(t)$ konvertiert, welcher an dem n-ten Anschlußpol bereitstellbar ist,

wobei der n-te Anschlußpol dem n-ten Stellglied zugeordnet ist und

wobei der Eingangsstrom $I_E^n(t)$ über die ersten und zweiten elektrischen Leiterkontakte dem n-ten der drei Stellglieder zugeführt wird,

oder

wobei das n-te der drei Stellglieder mit $n \in [1...3]$ eine über die Zeit t vorgegebene elektrische Eingangsspannung $U_E^n(t)$ in eine durch die Regeleinrichtung vorbestimmbare zeitlich variable Ausgangsspannung $U_A^n(t)$ konvertiert, welche an dem n-ten Anschlußpol bereitstellbar ist,

wobei der n-te Anschlußpol dem n-ten Stellglied zugeordnet ist und

wobei die Eingangsspannung $U_E^n(t)$ über die ersten und zweiten elektrischen Leiterkontakte an dem n-ten der drei Stellglieder anliegt.

Die externe Regeleinrichtung kann über jeweils eine zugeordnete Schnittstelle mit jedem der Stellglieder verbunden sein, wobei die Verbindung lösbar oder unlösbar sein kann. Die Bevorzugt ist die Schnittstelle eine galvanische, eine opto-elektronische, eine kapazitive und/oder eine induktive Schnittstelle. Bevorzugt kann die Schnittstelle ein Steckverbinder, eine Radiofrequenz-Verbindung bzw. eine Verbindung mittels elektromagnetischer Wellen und/oder eine Glasfaserverbindung sein. Bevorzugt kann die Regeleinrichtung eine Mehrzahl von 3, 4, 5, 6, 7, 8, 9, 12, 15, 18, 21, oder mehr Stellgliedern regeln.

## Bevorzugte Ausführungsformen der Anschlußdose

Vorzugsweise ist die Summe der zeitlich variablen Ausgangsströme $I_A^n(t)$ zu jedem Zeitpunkt gleich Null ist oder die Summe der zeitlich variablen Ausgangsspannungen $U_A^n(t)$ zu jedem Zeitpunkt gleich Null. Vorteilhafterweise ist die Regeleinrichtung ausgelegt die Summe der Ausgangsströme, welche über die Anschlußpole fließen, bzw. die Summe der Ausgangsspannungen, welche an den Ausgangspolen anliegen, bei betriebsgemäßem Gebrauch der Anschlußdose gleich Null zu halten. Vorteilhafterweise ist dann der über die Anschlußpole aus der Anschlußdose zu den angeschlossenen Verbrauchern fließende Strom gleich dem in die Anschlußdose von den Verbrauchern fließenden Strom. Somit kann vorteilhafterweise auf einen Nulleiterpol verzichtet werden, mit welchem ein Nulleiter sowie einer der elektrischen Leiter des Solarmoduls elektrisch kontaktiert wäre, wobei der Nulleiter den zwischen den Anschlußpolen verbleibenden Differenzstrom von oder zu dem angeschlossenen Verbraucher leiten würde. Alternativ oder zusätzlich kann der Nulleiterpol vorgesehen sein, welcher mit einem der elektrischen Leiter des Solarmoduls elektrisch kontaktiert ist.

Vorzugsweise sind die zeitlich variablen Ausgangsströme $I_A^n(t)$ periodische Ströme, insbesondere Wechselströme, und/oder sind die zeitlich variablen Ausgangsspannungen $U_A^n(t)$ periodische Spannungen, insbesondere Wechselspannungen. Beispielsweise kann der Ausgangsstrom $I_A^n(t)$ ein Rechteckstrom oder ein Dreiecksstrom sein. Analog kann die Ausgangsspannung $U_A^n(t)$ eine Rechteckspannung oder eine Dreiecksspannung sein. Bevorzugt kann beispielsweise der Rechteckstrom eine Pulslänge von $T_1$ aufweisen, wobei zwischen zwei benachbarten Rechteckpulsen eine Pulslücke der Länge $T_0$ besteht. Weiter bevorzugt ist die Stromstärke während eines Rechteckpulses vorgegeben, wobei die Stromstärke für jedes Rechteckpuls über eine vorbestimmte Zeit, beispielsweise innerhalb einer Sekunde, innerhalb einer Minute, innerhalb von 10 Minuten oder innerhalb einer Stunde bzw. abhängig von der Tageszeit oder einer Bewölkungssituation, konstant ist. Weiter bevorzugt kann auch die Länge jedes Reckteckpulses $T_1$ über die Zeit konstant sein. Abhängig von der tatsächlichen Bestrahlungsintensität und der dadurch erzeugten elektrischen Leistung in den einzelnen Solarzellengruppen, kann die Länge der Pulslücke $T_0$ zwischen zwei benachbarten Rechteckpulsen über die Zeit variieren. Durch eine Verkleinerung der Pulslänge $T_1$ und eine Vergrößerung der Pulslücke $T_0$ kann die effektive Leistung, welche an den Anschlußpolen bereitgestellt wird, verringert werden, wobei die Stromstärke vorteilhafterweise für jeden Rechteckpuls konstant bleiben kann und zwar vorteilhafterweise unabhängig von der bereitgestellten effektiven Leistung. Analog kann statt des Rechteckstromes auch eine Rechteckspannung mit einer Pulslänge $T_1$ und einer Pulslücke $T_0$ bereitgestellt sein. Die oben zu Rechteckstrom gemachten Ausführungen gelten analog auch für eine Rechteckspannung. Dementsprechend kann auch ein Dreiecksstrom oder eine Dreiecksspannung mit einer Pulslänge $T_1$ und einer Pulslücke $T_0$ bereitgestellt sein, wobei die zu dem Rechteckstrom und der Rechteckspannung gemachten Ausführungen analog gelten.

Weiter bevorzugt ist der Ausgangsstrom $I_A^n(t)$ ein Wechselstrom und/oder die Ausgangsspannung $U_A^n(t)$ eine Wechselspannung. Bevorzugt können der Ausgangsstrom $I_A^n(t)$ und/oder die Ausgangsspannung $U_A^n(t)$ annähernd eine kontinuierliche Sinusfunktion sein. Beispielsweise kann die Sinusfunktion durch eine Abfolge von Pulsen der Länge $T_1$ angenähert sein, wobei innerhalb der Pulslänge $T_1$ der Gesamtausgangsstrom $I_A^n(t)$ und/oder die Gesamtausgangsspannung $U_A^n(t)$ im wesentlichen konstant bleibt. Mit anderen Worten gilt $I_A^n(t) \approx I_A^n(t+T_1)$ bzw. $U_A^n(t) \approx U_A^n(t+T_1)$. Bevorzugt bleibt der Ausgangsstrom $I_A^n(t)$ bzw. die Ausgangsspannung $UA^n(t)$ innerhalb einer Toleranz von $\pm 10$ Prozent, weiter bevorzugt $\pm 5$ Prozent, des Sollwertes. Die Pulslänge $T_1$ ist bevorzugt kleiner als etwa 100 ms, weiter bevorzugt kleiner als etwa 10 ms, insbesondere kleiner als etwa 1 ms.

Insbesondere können der Ausgangsstrom $I_A^n(t)$ und/oder die Gesamtausgangsspannung $U_A^n(t)$ eine Wiederholungsperiode T aufweisen bzw. eine Wiederholfrequenz f=1/T, wobei die Wiederholfrequenz f insbesondere etwa 16,6 Hz, etwa 50 Hz oder etwa 60 Hz betragen kann. Bei einer Pulslänge $T_1$ von etwa 10 ms entspricht die zeitliche Pulslänge $T_1$ der zeitlichen Länge einer Halbwelle eines Wechselstromes mit der Frequenz f von 50 Hz. Der Wechselstrom hätte somit eine Rechteckform. Um eine Sinusform des 50 Hz Wechselstromes zu erreichen, ist eine kürzere Pulslänge $T_1$ erforderlich, beispielsweise eine um den Faktor 10 kürzere Pulslänge $T_1$ von 1 ms.

Vorteilhafterweise kann an den Anschlußpolen der Anschlußdose ein periodischer Strom bzw. ein Wechselstrom und/oder eine periodische Spannung bzw. eine Wechselspannung bereitgestellt sein, so daß eine elektrischer Verbraucher, welcher für den Betrieb mit Wechselstrom ausgelegt ist, unmittelbar an die Anschlußdose angeschlossen werden kann. Weiter vorteilhafterweise kann ein periodischer Strom bzw. ein Wechselstrom mittels eines Transformators auf induktivem Weg in einem vorbestimmten Verhältnis transformiert werden, um eine gewünschte Stromstärke bzw. eine gewünschte Spannung zu erhalten. Gegenüber dem Fall, daß an den Anschlußpolen der Anschlußdose ein Gleichstrom bereitgestellt ist, ist es vorteilhafterweise nicht notwendig einen Wechselrichter zwischen der Anschlußdose und dem elektrischen Verbraucher, welcher mit Wechselstrom betrieben wird, zu schalten.

Vorzugsweise sind die zeitlich variablen Ausgangsströme $I_A^n(t)$ identische, periodische, zueinander um 120° phasenverschobene Ströme und/oder die zeitlich variablen Ausgangsspannungen $U_A^n(t)$ identische, periodische, zueinander um 120° phasenverschobene Spannungen. Mit anderen Worten entspricht der von dem ersten Stellglied an dem ersten Anschlußpolkontakt bereitgestellte erste Ausgangsstrom $I_A^{[1]}(t)$ dem von dem zweiten Stellglied an dem zweiten Anschlußpolkontakt bereitgestellten zweiten Ausgangsstrom $I_A^{[2]}(t+\frac{2\pi}{3}T)$, wobei die beiden Ausgangsströme um eine Phase von 120 Grad oder um den $2\pi/3$-ten Teil einer Periode T des ersten bzw. zweiten Ausgangsstroms zeitlich zueinander verschoben sind. Weiter entspricht der erste Ausgangsstrom $I_A^{[1]}(t)$ dem von dem dritten Stellglied an dem dritten Anschlußpolkontakt bereitgestellten dritten Ausgangsstrom $I_A^{[3]}(t+\frac{4\pi}{3}T)$, wobei die beiden Ausgangsströme um eine Phase von 240 Grad oder um den $4\pi/3$-ten Teil einer Periode T des ersten bzw. dritten Ausgangsstroms zeitlich zueinander verschoben sind. Dementsprechend sind der zweite und der dritte Ausgangsstrom zueinander um eine Phase von 120 Grad verschoben, so daß gilt $I_A^{[2]}(t) = I_A^{[3]}(t+\frac{2\pi}{3}T)$.

Unter der Annahme, daß die Ausgangsströme jeweils ein Wechselstrom sind, insbesondere mit einer Frequenz von etwa 50 Hz oder etwa 60 Hz, ergeben die Ausgangsströme besonders bevorzugt einen Dreiphasenwechselstrom bzw. einen Drehstrom. Weiter bevorzugt liegt zwischen zwei beliebigen der drei Anschlußpole eine Spannung von etwa 380 Volt oder von etwa 220 Volt an. Mit anderen Worten können die drei Stellglieder mittels der Regelvorrichtung derart gesteuert bzw. geregelt sind, um an den drei Anschlußpolen der Anschlußdose einen Dreiphasenwechselstrom anzulegen.

Vorzugsweise sind die drei Stellglieder mittels der Regeleinrichtung miteinander zeitlich synchronisierbar. Dadurch können die Ausgangsströme $I_A^{[n]}(t)$ vorteilhafterweise mittels der Regeleinrichtung mit einer zueinander vorbestimmten Phasenlage an den Anschlußpolen angelegt sein. Vorteilhafterweise ermöglicht eine zeitgenaue Synchronisation der einzelnen Stellglieder zueinander eine hinreichend genaues Bereitstellen eines Dreiphasenwechselstroms an den Anschlußpolen der Anschlußdose.

Vorzugsweise sind die Stellglieder Gleichstromsteller bzw. umfassen die Stellglieder zumindest einen Metalloxid-Feldeffekttransistor. Gleichstromsteller werden auch als DC-DC-Konverter oder DC-DC-Wandler bezeichnet. Ein Gleichstromsteller wandelt einen vorgegebenen Eingangsstrom oder eine vorgegebene Eingangsspannung um, insbesondere durch periodisches Schalten und/oder mittels Zwischenpufferung von elektrischer Energie in einem Induktor oder in einer Kapazität, so daß ein anderer gewünschter Ausgangsstrom bzw. eine anderer gewünschte Ausgangsspannung am Ausgang des Gleichstromstellers entsteht. Vorteilhafterweise können der Eingangsstrom und/oder die Eingangsspannung an jedem der Gleichstromsteller derart vorbestimmt sein, daß die dem Gleichstromsteller zugeordnete Solarzellengruppe des Solarmoduls gemäß der solarzellengruppeneigenen Strom-Spannungs-Kennlinie im optimalen Arbeitspunkt arbeitet, während der Gleichstromsteller ausgangsseitig einen vorbestimmbaren bzw. gewünschten Ausgangsstrom bzw. eine gewünschte Ausgangsspannung bereitstellt. Bevorzugt umfaßt zumindest ein Stellglied oder jedes der Stellglieder zumindest einen Metalloxid-Feldeffekttransistor (MOSFET). Weiter vorzugsweise kann zumindest eines der Stellglieder auch einen IGBT (Insulated Gate Bipolar Transistor) oder einen Thyristor umfassen.

Vorzugsweise weist die Regeleinrichtung eine Schnittstelle auf, so daß die Regeleinrichtung mit einer externen Steuereinrichtung verbindbar ist. Vorteilhafterweise kann der Regeleinrichtung mittels der Schnittstelle gewünschte Ausgangsstrom $I_G^n(t)$ und/oder eine gewünschte Gesamtausgangsspannung $U_G^n(t)$ übermittelt werden, so daß die Anschlußdose vorteilhafterweise in Abhängigkeit von dem an den Anschlußpolen angeschlossenen elektrischen Verbraucher zum Betrieb des angeschlossenen Verbrauchers konfiguriert werden kann.

Insbesondere kann die Regeleinrichtung auch einen Mikroprozessor aufweisen. Bevorzugt umfaßt die Anschlußdose eine Stromquelle, insbesondere einen Akkumulator, um beispielsweise die Regeleinrichtung und/oder die Schnittstelle zu betreiben. Die Stromquelle kann regenerativ, d.h. wiederaufladbar sein, wobei das Aufladen mittels des an die Anschlußdose angeschlossenen Solarmoduls erfolgen kann, wenn dieses beleuchtet wird. Die Stromquelle kann vorzugsweise auch über den über die Anschlußpole fließenden Strom geladen werden. Weiter bevorzugt kann die Stromquelle über eine externe Ladevorrichtung geladen werden. Vorteilhafterweise kann die Regeleinrichtung und/oder die Schnittstelle auch betrieben werden, wenn das Solarpaneel nicht durch die Sonne beleuchtet wird.

Bevorzugt ist die Schnittstelle eine galvanische, eine opto-elektronische, eine kapazitive und/oder eine induktive Schnittstelle. Bevorzugt kann die Schnittstelle ein Steckverbinder, eine Radiofrequenz-Verbindung bzw. eine Verbindung mittels elektromagnetischer Wellen und/oder eine Glasfaserverbindung sein. Vorteilhafterweise ist eine Fernabfrage der in der Regeleinrichtung erfaßten bzw. gespeicherten Betriebsparameter über die Schnittstelle möglich. Weiter vorteilhafterweise kann ein unbefugter Eingriff in das Solarpaneel (z.B. Vandalismus oder Diebstahl) über die Schnittstelle an die externe Steuereinrichtung gemeldet werden. Ferner ist es möglich Betriebsparameter vorzugeben, wie beispielsweise die Vorgabe der gewünschten Ausgangsströme bzw. Ausgangsspannungen.

Bevorzugt umfaßt die Anschlußdose zumindest eine Meßeinrichtung, welche mit der Regeleinrichtung verbunden ist. Vorteilhafterweise können durch die zumindest eine Meßeinrichtung Betriebszustände der Anschlußdose detektiert werden, um beispielsweise die Anschlußdose vor Schaden zu schützen. Beispielsweise kann die Anschlußdose eine Temperaturmeßeinrichtung umfassen, welche die Betriebstemperatur im Inneren der Anschlußdose oder beispielsweise die Temperatur der Stellglieder erfaßt. Bei einer Überschreitung der zulässigen Betriebstemperatur kann bzw. können beispielsweise ein Stellglied oder mehrere Stellglieder überbrückt werden, so daß kein Schaden durch eine zu hohe Betriebstemperatur entsteht. Gleichzeitig kann eine Warnmeldung über die Schnittstelle der Anschlußdose an eine externe Einrichtung gesendet werden.

Vorzugsweise umfaßt die Anschlußdose eine Mehrzahl von Wandlervorrichtungen. Jede der Wandlervorrichtungen kann mit einer oder mehreren zugeordneten Solarzellengruppe(n) des Solarmoduls elektrisch verbunden sein. Vorteilhafterweise kann eine Wandervorrichtung abgeschaltet oder mit einer verminderten abgegebenen elektrischen Leistung betrieben werden, falls die der Wandlervorrichtung zugeordnete(n) Solarzellengruppe(n) abgeschattet ist und daher keine oder nur wenig elektrische Leistung erzeugen kann. Die Stellglieder einer Wandlervorrichtung können dabei einer, mehreren oder allen Solarzellengruppen des Solarmoduls zugeordnet sein. Bevorzugt kann eine Solarzellengruppe einem, mehreren oder allen Wandlervorrichtungen zugeordnet sein. Die Regeleinrichtungen der Wandlervorrichtungen der Anschlußdose sind vorzugsweise zu einer einzigen Regeleinrichtung zusammengefaßt.

Solarpaneel gemäß einem Aspekt

Ein weiterer Aspekt der vorliegenden Erfindung betrifft ein Solarpaneel umfassend:

- zumindest ein Solarmodul mit zumindest zwei elektrischen Leitern und
- eine Anschlußdose gemäß einem der vorigen Ansprüche, wobei jeder der ersten elektrischen Leiterkontakte der Anschlußdose und jeder der zweiten elektrischen Leiterkontakte mit einem zugeordneten elektrischen Leiter des Solarmoduls elektrisch kontaktiert ist.

In anderen Worten kann das Solarpaneel umfassen: ein Solarmodul, beispielsweise mit einem im wesentlichen plattenförmigen Körper, mit zumindest einer spannungserzeugenden Solarzellengruppe, zumindest zwei mit der zumindest einen Solarzellengruppe verbundenen Leiterbänder, die an einer Oberfläche des Solarmoduls aus diesem herausgeführt sind und zumindest eine erfindungsgemäße Anschlußdose.

Verwendung gemäß einem Aspekt

Ein weiterer Aspekt der vorliegenden Erfindung betrifft eine Verwendung einer erfindungsgemäßen Anschlußdose, um einen elektrischen Verbraucher mit einem Solarmodul zu kontaktieren, wobei jeder der ersten elektrischen Leiterkontakte der Anschlußdose und jeder der zweiten elektrischen Leiterkontakte mit einem zugeordneten elektrischen Leiter des Solarmoduls elektrisch kontaktiert ist und wobei der elektrische Verbraucher mit den Anschlußpolen der Anschlußdose elektrisch verbunden ist.

Verfahren gemäß einem Aspekt

Ein weiterer Aspekt der vorliegenden Erfindung betrifft ein Verfahren zum Erzeugen eines Dreiphasenstroms umfassend die folgenden Schritte:

- Bereitstellen eines Solarpaneels eines erfindungsgemäßen Solarpaneels;
- Vorbestimmen eines zeitlich variablen Ausgangsstrom $I_A^n(t)$ und/oder einer zeitlich variablen Ausgangsspannung $U_A^n(t)$;
- Bereitstellen des vorbestimmten Ausgangsstroms $I_A^n(t)$ und/oder der Ausgangsspannung $U_A^n(t)$ an der Regeleinrichtung des Solarpaneels;
- Regeln der Stellglieder des Solarpaneels mittels der Regeleinrichtung,
  wobei jedes der Stellglieder einen vorgegebenen elektrischen Eingangsstrom in einen durch die Regeleinrichtung vorbestimmten zeitlich variablen Ausgangsstrom konvertiert, welcher an einem zugeordneten Anschlußpol bereitgestellt wird
  oder
  wobei jedes der Stellglieder eine vorgegebene elektrische Eingangsspannung in eine durch die Regeleinrichtung vorbestimmte zeitlich variable Ausgangsspannung konvertiert, welche an einem zugeordneten Anschlußpol bereitgestellt wird.

Dabei kann das Bereitstellen an der Regeleinrichtung umfassen, daß die vorbestimmten Ausgangsströme $I_A^n(t)$ und/oder die vorbestimmten Ausgangsspannungen $U_A^n(t)$ von einer externen Steuereinrichtung beispielsweise über eine Schnittstelle zu der Regeleinrichtung übertragen werden. Alternativ oder zusätzlich können vorbestimmte Ausgangsströme $I_A^n(t)$ und/oder vorbestimmte Ausgangsspannungen $U_A^n(t)$ in der Regeleinrichtung abrufbar gespeichert sein, beispielsweise in einer Speichereinrichtung wie einem ROM, einem EEPROM, eine festen Verdrahtung bzw. Verschaltung oder ähnliches.

Anordnung

Eine Alternative, welche nicht Gegenstand der Ansprüche ist, betrifft eine Anordnung von zumindest drei Solarpaneelen, wobei jedes n-te Solarpaneel ein Solarmodul und eine Anschlußdose aufweist,
wobei die Anschlußdose

- zumindest einen Anschlußpol,
- einen Nulleiterpol und
- zumindest eine Wandlervorrichtung aufweist,
  wobei die zumindest eine Wandlervorrichtung zumindest ein Stellglied umfaßt,
  wobei das zumindest eine Stellglied einen ersten elektrischen Leiterkontakt, einen zweiten elektrischen Leiterkontakt, einen Anschlußpolkontakt und einen Nulleiterpolkontakt aufweist,
  wobei der erste elektrische Leiterkontakt und der zweite elektrische Leiterkontakt mit einem zugeordneten elektrischen Leiter des Solarmoduls elektrisch verbunden ist, wobei der Anschlußpolkontakt mit einem zugeordneten Anschlußpol elektrisch verbunden ist;
  wobei der Nulleiterpolkontakt mit einem Nulleiterpol elektrisch verbunden ist;

wobei das zumindest eine Stellglied mit einer Regeleinrichtung verbindbar ist,

wobei die Nulleiterpole der zumindest drei Solarpaneele elektrisch verbunden sind,

wobei das Stellglied des n-te Solarpaneels einen über eine Zeit t vorgegebenen elektrischen Eingangsstrom $I_E^n(t)$ in einen durch die Regeleinrichtung vorbestimmbaren zeitlich variablen Ausgangsstrom $I_A^n(t)$ konvertiert, welcher an dem Anschlußpol des n-ten Solarpaneels bereitstellbar ist, und

wobei der Eingangsstrom $I_E^n(t)$ über die ersten und zweiten elektrischen Leiterkontakte dem Stellglied zugeführt wird, oder

wobei das Stellglied des n-ten Solarpaneels eine über die Zeit t vorgegebene elektrische Eingangsspannung $U_E^n(t)$ in eine durch die Regeleinrichtung vorbestimmbare zeitlich variable Ausgangsspannung $U_A^n(t)$ konvertiert, welche an dem Anschlußpol des n-ten Solarpaneels bereitstellbar ist, und

wobei die Eingangsspannung $U_E^n(t)$ über die ersten und zweiten elektrischen Leiterkontakte an dem Stellglied anliegt.

Figurenbeschreibung

Nachfolgend werden bevorzugte Ausführungsformen der vorliegenden Erfindung anhand der beigefügten Zeichnungen beispielhaft erläutert. Es zeigen:

Figur 1:  einen schematischen Aufbau einer Ausführungsform eines Solarpaneels;
Figur 2:  einen schematischen Aufbau einer weiteren Ausführungsform eines Solarpaneels;
Figur 3:  eine beispielhafte Dreiphasenspannung;
Figur 4a:  eine beispielhafte Anordnung einer Mehrzahl von Solarpaneelen;
Figur 4b:  eine weitere Anordnung einer Mehrzahl von Solarpaneelen; und
Figur 5:  eine beispielhafte Anordnung von drei Solarpaneelen.

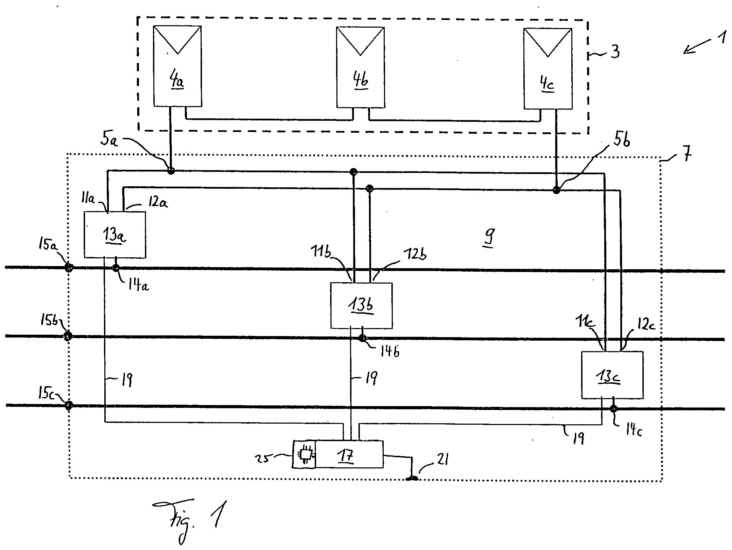

**Figur 1** zeigt einen schematischen Aufbau einer Ausführungsform eines Solarpaneels 1 mit einem Solarmodul 3, welches auf einer Bestrahlungsseite drei in Reihe geschaltete spannungserzeugende Solarzellengruppen 4a, 4b, 4c aufweist, wobei zwei elektrische Leiter 5a, 5b auf einer der Bestrahlungsseite abgewandten Anschlußseite aus dem Solarmodul 3 herausgeführt und mit einer Anschlußdose 7 kontaktiert sind. Die Anschlußdose 7 kann an bzw. auf der Anschlußseite des Solarmoduls 3 an bzw. auf diesem angeordnet bzw. befestigt sein.

Die Anschlußdose 7 umfaßt in dieser Ausführungsform eine Wandlervorrichtung 9 eine Anzahl N von drei Stellgliedern 13a, 13b, 13c, wobei jedes der Stellglieder 13a, 13b, 13c einen zugeordneten ersten elektrischen Leiterkontakt 11 a, 11 b, 11 c, einen zugeordneten zweiten elektrischen Leiterkontakt 12a, 12b, 12c und einen zugeordneten Anschlußpolkontakt 14a, 14b, 14c aufweist. Jedes der drei Stellglieder 13a, 13b, 13c ist mittels des zugeordneten ersten elektrischen Leiterkontakts 11a, 11b, 11c elektrisch mit einem der zwei elektrischen Leiter 5a kontaktierbar, wobei dieser Kontakt unmittelbar oder mittelbar über ein zugeordnetes Kontaktelement erfolgen kann. Jedes der drei Stellglieder 13a, 13b, 13c ist mittels des zugeordneten zweiten elektrischen Leiterkontakts 12a, 12b, 12c unmittelbar oder mittelbar elektrisch mit dem anderen der zwei elektrischen Leiter 5b kontaktierbar.

Die drei ersten elektrischen Leiterkontakte 11 a, 11 b, 11 c sind beim betriebsgemäßen Gebrauch des Solarpaneels 1 jeweils mit dem zugeordneten elektrischen Leiter 5a des Solarmoduls 3 elektrisch kontaktiert. Mit anderen Worten sind die drei ersten elektrischen Leiterkontakte 11a, 11 b, 11 c untereinander elektrisch verbunden. Entsprechend sind die drei zweiten elektrischen Leiterkontakte 12a, 12b, 12c beim betriebsgemäßen Gebrauch des Solarpaneels 1 jeweils mit einem zugeordneten elektrischen Leiter 5b des Solarmoduls 3 elektrisch kontaktiert. Mit anderen Worten sind auch die drei zweiten elektrischen Leiterkontakte 12a, 12b, 12c untereinander elektrisch verbunden.

Die Stellglieder 13a, 13b, 13c sind jeweils unmittelbar oder mittelbar über den zugeordneten Anschlußpolkontakt 14, 14b, 14c mit einem zugeordneten von drei Anschlußpolen 15a, 15b, 15c der Anschlußdose 7 elektrisch kontaktiert. Die Stellglieder 13a, 13b, 13c stellen jeweils einen elektrischen Kontakt zwischen dem zugeordneten Anschlußpol 15a, 15b, 15c und den Leiterkontakten 11 a, 11 b, 11 c, 12a, 12b, 12c her, welche dem jeweiligen Stellglied 13a, 13b, 13c zugeordnet sind.

Ein von den Solarzellengruppen 4a, 4b, 4c erzeugter, über die Zeit t variabler elektrischer Eingangsstrom $I_E^{[1]}(t)$, welcher über die elektrischen Leiter 5a, 5b sowie die Leiterkontakte 11a, 12a zu dem ersten Stellglied 13a und wieder zurück zur den Solarzellengruppen 4a, 4b, 4c fließt, wird durch das erste Stellglied 13a in einen vorbestimmbaren ersten Ausgangsstrom $I_A^{[1]}(t)$ konvertiert, welcher ebenfalls zeitlich variabel sein kann. Analog wird ein von den Solarzellengruppen 4a, 4b, 4c erzeugter elektrischer Eingangsstrom $I_E^{[2]}(t)$, welcher über die elektrischen Leiter 5a, 5b sowie die Leiterkontakte 11 b, 12b zu dem zweiten Stellglied 13b fließt, durch das zweite Stellglied 13b in einen vorbestimmbaren zweiten Ausgangsstrom $I_A^{[2]}(t)$ konvertiert und ein von den Solarzellengruppen 4a, 4b, 4c erzeugter elektrischer Eingangsstrom $I_E^{[3]}(t)$, welcher über die elektrischen Leiter 5a, 5b sowie die Leiterkontakte 11 c, 12c zu dem dritten Stellglied 13c fließt, wird durch das dritte Stellglied 13c in einen vorbestimmbaren dritten Ausgangsstrom $I_A^{[3]}(t)$ konvertiert.

Die Ausgangsströme der einzelnen Stellglieder 13a, 13b, 13c werden an dem zugeordneten Anschlußpol 15a, 15b, 15c bereitgestellt. Mit anderen Worten wird der erste Ausgangsstrom an dem ersten Anschlußpol 15a, der zweite Ausgangsstrom an dem zweiten Anschlußpol 15b und der dritten Ausgangsstrom an dem dritten Anschlußpol 15c bereitgestellt.

Alternativ kann eine von den Solarzellengruppen 4a, 4b, 4c erzeugte elektrische Eingangsspannung $U_E(t)$, welche zwischen den Leiterkontakten 11 a, 12a anliegt und dem Stellglied 13a zugeführt wird, durch das Stellglied 13a in eine vorbestimmbare erste Ausgangsspannung $U_A^{[1]}(t)$ konvertiert werden. Dementsprechend liegt die Eingangsspannung $U_E(t)$ zwischen den Leiterkontakten 11 b, 12b an und kann durch das Stellglied 13b in eine vorbestimmbare zweite Ausgangsspannung $U_A^{[2]}(t)$ konvertiert werden. Weiterhin liegt die Eingangsspannung $U_E(t)$ zwischen den Leiterkontakten 11 c, 12c an und kann durch das Stellglied 13c in eine vorbestimmbare dritte Ausgangsspannung $U_A^{[3]}(t)$ konvertiert werden. Die Ausgangsspannungen der einzelnen Stellglieder 13a, 13b, 13c können über die zugeordneten Anschlußpole 15a, 15b, 15c bereitgestellt werden. Weiter kann die Anschlußdose einen Nulleiterpol (nicht gezeigt) aufweisen, welcher mit einem der elektrischen Leiter 5a, 5b elektrisch verbunden sein kann, und welcher als gemeinsamer Referenzpunkt für die an den Anschlußpolen anliegenden Ausgangsspannungen dienen kann. Die Anschlußpole 15a, 15b, 15c sowie der Nulleiterpol können bevorzugt als Anschlußkabel oder als Verbinder ausgebildet sein.

Die in der Figur 1 gezeigte Anschlußdose 7 umfaßt eine Regeleinrichtung 17, welche mit den Stellgliedern 13a, 13b, 13c über die Steuerleitungen 19 verbunden ist. Es versteht sich, daß die Stellglieder 13a, 13b, 13c auch mittels einer einzigen Steuerleitung miteinander und mit der Regeleinrichtung 17 verbunden sein können. Die Regeleinrichtung speichert vorzugsweise einen gewünschten Ausgangsstrom $I_G^n(t)$ bzw. eine gewünschte Ausgangsspannung $U_G^n(t)$, welcher bzw. welche an dem zugeordneten Anschlußpol anliegen soll. Gemäß den in der Regeleinrichtung 17 gespeicherten vorbestimmten Werten konvertieren die Stellglieder 13a, 13b, 13c die durch die Solarzellengruppen 4a, 4b, 4c des Solarmoduls 3 erzeugten Eingangsströme $I_E^{[1]}(t)$, $I_E^{[2]}(t)$, $I_E^{[3]}(t)$ zu zugehörigen Ausgangsströmen $I_A^{[1]}(t)$, $I_A^{[2]}(t)$, $I_A^{[3]}(t)$, welche den gewünschten Ausgangsströmen $I_G^{[1]}(t)$, $I_G^{[2]}(t)$, $I_G^{[3]}(t)$ entsprechen. Entsprechend können die von dem Solarmodul 3 erzeugten Eingangsspannungen zu zugehörigen Ausgangsspannungen konvertiert werden, welche den gewünschten Ausgangsspannungen entsprechen.

Bevorzugt ist in der Regeleinrichtung 17 die Strom-Spannungs-Kennlinie zumindest einer der Solarzellengruppen 4a, 4b, 4c, bevorzugt jeder der Solarzellengruppen 4a, 4b, 4c, gespeichert, so daß die Regeleinrichtung 17 den Innenwiderstand zumindest eines der zugeordneten Stellglieder 13a, 13b, 13c, bevorzugt jedes der zugeordneten Stellglieder 13a, 13b, 13c, derart vorgeben kann, daß durch Einstellen des Innenwiderstandes die zugeordnete Solarzellengruppe gemäß der gespeicherten Strom-Spannungs-Kennlinie im optimalen Arbeitspunkt gehalten werden kann, um vorteilhafterweise die durch die Solarzellengruppe abgegebene elektrische Leistung zu maximieren.

In der in Fig. 1 gezeigten bevorzugten Ausführungsform umfaßt die Regeleinrichtung 17 eine Schnittstelle 21, so daß die Regeleinrichtung 17 mit einer externen Steuereinrichtung (nicht gezeigt) verbindbar ist. Die Schnittstelle 21 kann mittels einer galvanischen bzw. elektrischen oder einer opto-elektronischen Verbindung ausgebildet sein, so daß die Regeleinrichtung 17 mittels Steuerleitungen, beispielsweise elektrische Kabel oder Glasfaserkabel, mit der externen Steuereinrichtung verbunden sein kann. Die Schnittstelle 21 kann auch als kapazitive und/oder induktive Schnittstelle ausgebildet sein, die eine berührungsfreie Verbindung, insbesondere mittels elektromagnetischer Wellen, zwischen Regeleinrichtung 17 und externer Steuereinrichtung herstellen kann. Mittels der Steuerleitungen bzw. der berührungsfreien Verbindung, ist bevorzugt eine Fernabfrage zu den in der Regeleinrichtung 17 erfaßten bzw. gespeicherten Betriebsparameter möglich. Ferner ist es möglich der Regeleinrichtung 17 Betriebsparameter vorzugeben, wie beispielsweise die Vorgabe der gewünschten Ausgangsströme $I_G^{[n]}(t)$ bzw. der gewünschten Ausgangsspannungen $U_G^{[1]}(t)$, $U_G^{[2]}(t)$, $U_G^{[3]}(t)$ jeweils mit n=1, 2, 3.

Um die Kommunikation über die Schnittstelle 21 und/oder die Regelung der Ausgangsströme bzw. der Ausgangsspannungen zu ermöglichen, kann die Regeleinrichtung 17 vorzugsweise einen Mikroprozessor 25 umfassen. Bevorzugt umfaßt die Regeleinrichtung 17 zur Erfassung der aktuellen Betriebsparameter eine Strommeßeinrichtung und/oder eine Spannungsmeßeinrichtung und/oder eine Temperaturmeßeinrichtung (jeweils nicht gezeigt). Beispielsweise können die aktuellen Werte der Ausgangsströme $I_A^{[n]}(t)$ bzw. der Ausgangsspannungen $U_A^{[n]}(t)$ mittels der Strommeßeinrichtung bzw. der Spannungsmeßeinrichtung erfaßt werden, um beispielsweise zur Regelung der Stellglieder 13a, 13b, 13c verwendet zu werden. Alternativ oder zusätzlich können die aktuellen Werte der externen Steuereinrichtung (nicht gezeigt) zur Verfügung gestellt werden.

Die Temperaturmeßeinrichtung kann beispielsweise die Betriebstemperatur der Anschlußdose 7 erfassen. Die durch die Temperaturmeßeinrichtung erfaßten bzw. gemessenen Temperaturen können der Regeleinrichtung 17 bzw. der externen Steuereinrichtung bereitgestellt werden, um den Betriebszustand der Anschlußdose 7 bzw. des Solarpaneels 1 zu überwachen. Bei einer Betriebstemperatur außerhalb eines vorbestimmten Betriebstemperaturbereichs kann die Anschlußdose 7 bzw. das Solarpaneel 1 vorzugsweise mittels der externen Steuereinrichtung oder der Regeleinrichtung 17 abgeschaltet werden.

Um die Regeleinrichtung 17 bzw. den Mikroprozessor 25 mit elektrischer Energie zu versorgen, umfaßt die Anschlußdose 7 vorzugsweise eine Stromquelle (nicht gezeigt). Die Stromquelle kann beispielsweise ein Akkumulator sein, welcher durch das Solarmodul 3 geladen wird, wenn dieses beleuchtet wird. Alternativ oder zusätzlich kann der Akkumulator mittels des über die Anschlußpole 15a, 15b, 15c fließenden Stroms geladen werden oder über eine an die Schnittstelle 21 angeschlossene Ladevorrichtung. Vorteilhafterweise kann die Regeleinrichtung 17 auch betrieben werden, wenn das Solarmodul 3 nicht beleuchtet wird bzw. wenn kein Strom über die Anschlußpole 15a, 15b, 15c fließt.

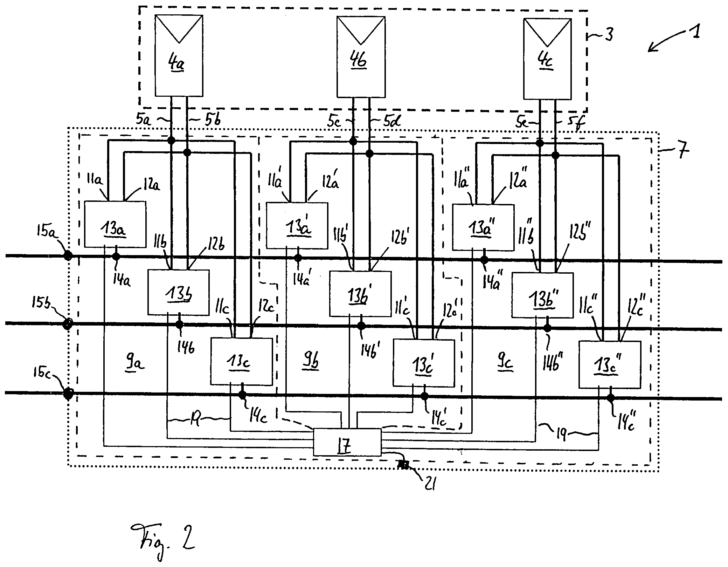

**Figur 2** zeigt einen schematischen Aufbau einer weiteren Ausführungsform eines Solarpaneels 1 mit einem Solarmodul 3, welches auf einer Bestrahlungsseite drei spannungserzeugende Solarzellengruppen 4a, 4b, 4c aufweist, deren elektrische Leiter 5a, 5b, 5c, 5d, 5e, 5f auf einer der Bestrahlungsseite abgewandten Anschlußseite aus dem Solarmodul 3 herausgeführt und mit einer Anschlußdose 7 kontaktiert sind. Die Anschlußdose 7 ist an bzw. auf der Anschlußseite des Solarmoduls 3 an bzw. auf diesem angeordnet bzw. befestigt.

Die Anschlußdose 7 umfaßt in dieser Ausführungsform eine Anzahl W von drei identisch aufgebauten Wandlervorrichtungen 9a, 9b, 9c. Es versteht sich, daß die Anzahl W der Wandlervorrichtungen jede natürliche Zahl W betragen kann, also beispielsweise kann die Anschlußdose 7 ein, zwei, drei, vier, fünf, sechs, sieben, acht, neun, zehn, usw. Wandlervorrichtungen umfassen. Jede der drei Wandlervorrichtungen 9a, 9b, 9c ist entsprechend der in der Figur 1 gezeigten Ausführungsform der Wandlervorrichtung aufgebaut. So weist jede der drei Wandlervorrichtungen 9a, 9b, 9c weist eine Anzahl N von drei Stellgliedern 13a-13c, 13a'-13c' und 13a"-13c" auf. Jedes der Stellglieder 13a-13c, 13a'-13c' und 13a"-13c" weist einen zugeordneten ersten elektrischen Leiterkontakt 11a-11c, 11a'-11c' und 11 a"-11 c", einen zugeordneten zweiten elektrischen Leiterkontakt 12a-12c, 12a'-12c' und 12a"-12c" und einen zugeordneten Anschlußpolkontakt 14a-14c, 14a'-14c' und 14a"-14c" auf. Dabei sind die ungestrichenen Bezugszeichen der ersten der drei Wandlervorrichtungen 9a, die einfach gestrichenen Bezugszeichen der zweiten der drei Wandlervorrichtungen 9b und die zweifach gestrichenen Bezugszeichen der dritten der drei Wandlervorrichtungen 9c zugeordnet.

Jedes der drei Stellglieder 13a, 13b, 13c der ersten Wandlervorrichtung 9a ist mittels des zugeordneten ersten elektrischen Leiterkontakts 11 a, 11 b, 11 c elektrisch mit einem der zwei elektrischen Leiter 5a kontaktierbar, wobei dieser Kontakt unmittelbar oder mittelbar über ein zugeordnetes Kontaktelement erfolgen kann. Jedes der drei Stellglieder 13a, 13b, 13c der ersten Wandlervorrichtung 9a ist mittels des zugeordneten zweiten elektrischen Leiterkontakts 12a, 12b, 12c unmittelbar oder mittelbar elektrisch mit dem anderen der zwei elektrischen Leiter 5b kontaktierbar. Folglich ist die erste Wandlervorrichtung 9a elektrisch mit der ersten Solarzellengruppe 4a elektrisch verbunden.

Entsprechend ist jedes der drei Stellglieder 13a', 13b', 13c' der zweiten Wandlervorrichtung 9b mittels des zugeordneten ersten elektrischen Leiterkontakts 11a', 11 b', 11 c' mit einem der zwei elektrischen Leiter 5c der zweiten Solarzellengruppe 4b und mittels des zugeordneten zweiten elektrischen Leiterkontakts 12a', 12b', 12c' mit dem anderen der zwei elektrischen Leiter 5d elektrisch kontaktierbar, um die zweite Wandlervorrichtung 9b elektrisch mit der zweiten Solarzellengruppe 4b elektrisch zu verbinden. Analog ist jedes der drei Stellglieder 13a", 13b", 13c" der dritten Wandlervorrichtung 9c mittels des zugeordneten ersten elektrischen Leiterkontakts 11 a", 11 b", 11 c" mit einem der zwei elektrischen Leiter 5e der dritten Solarzellengruppe 4c und mittels des zugeordneten zweiten elektrischen Leiterkontakts 12a", 12b", 12c" mit dem anderen der zwei elektrischen Leiter 5f elektrisch kontaktierbar, um die dritte Wandlervorrichtung 9c elektrisch mit der zweiten Solarzellengruppe 4c elektrisch zu verbinden.

Die Stellglieder 13a-13c, 13a'-13c' und 13a"-13c" sind jeweils unmittelbar oder mittelbar über den zugeordneten Anschlußpolkontakt 14a-14c, 14a'-14c' und 14a"-14c" mit einem zugeordneten von drei Anschlußpolen 15a, 15b, 15c der Anschlußdose 7 elektrisch kontaktiert. Die Stellglieder 13a-13c, 13a'-13c' und 13a"-13c" stellen jeweils einen elektrischen Kontakt zwischen dem zugeordneten Anschlußpol 15a, 15b, 15c und den Leiterkontakten 11a-11c, 11a'-11c' und 11a"-11 c", 12a-12c, 12a'-12c' und 12a"-12c" bzw. den Solarmodulen 4a, 4b, 4c her, welche dem jeweiligen Stellglied zugeordnet sind.

Ein von der ersten Solarzellengruppe 4a erzeugter, über die Zeit t variabler elektrischer Eingangsstrom $I_E^{[1,1]}(t)$, welcher über die elektrischen Leiter 5a, 5b sowie die Leiterkontakte 11a, 12a zu dem ersten Stellglied 13a der ersten Wandlervorrichtung 9a und wieder zurück zur ersten Solarzellengruppe 4a fließt, wird durch das erste Stellglied 13a der ersten Wandlervorrichtung 9a in einen vorbestimmbaren Teilausgangsstrom $I_A^{[1,1]}(t)$ konvertiert, welcher ebenfalls zeitlich variabel sein kann. Analog wird ein von der zweiten Solarzellengruppe 4b erzeugter elektrischer Eingangsstrom $I_E^{[2,1]}(t)$, welcher über die elektrischen Leiter 5c, 5d sowie die Leiterkontakte 11a', 12a' zu dem ersten Stellglied 13a' der zweiten Wandlervorrichtung 9b fließt, durch das erste Stellglied 13a' der zweiten Wandlervorrichtung 9b in einen vorbestimmbaren Teilausgangsstrom $I_A^{[2,1]}(t)$ konvertiert und ein von der dritten Solarzellengruppe 4c erzeugter elektrischer Eingangsstrom $I_E^{[3,1]}(t)$, welcher über die elektrischen Leiter 5e, 5f sowie die Leiterkontakte 11 a", 12a" zu dem ersten Stellglied 13a" der dritten Wandlervorrichtung 9c fließt, wird durch das erste Stellglied 13a" der dritten Wandlervorrichtung 9c in einen vorbestimmbaren Teilausgangsstrom $I_A^{[3,1]}(t)$ konvertiert. Die Teilausgangsströme der einzelnen ersten Stellglieder 13a, 13a', 13a" der drei Wandlervorrichtungen addieren sich zu einem ersten Ausgangsstrom $I_A^{[1]}(t)$, welcher über den ersten Anschlußpol 15a bereitgestellt werden kann. Der erste Ausgangsstrom $I_A^{[1]}(t)$ ist als Summe der Teilausgangsströme in Abhängigkeit von der Anzahl W der Wandlervorrichtungen 9a, 9b, 9c durch die Gleichung

$$I_A^{[1]}(t) = \sum_{w=1}^{W} I_A^{[w,1]}(t) \qquad\qquad (1)$$

gegeben.

Analog zu dem ersten Ausgangsstrom $I_A^{[1]}(t)$ sind der zweite Ausgangsstrom $I_A^{[2]}(t)$ und der dritte Ausgangsstrom $I_A^{[3]}(t)$ durch die Gleichungen

$$I_A^{[2]}(t) = \sum_{w=1}^{W} I_A^{[w,2]}(t) \quad \text{und} \quad I_A^{[3]}(t) = \sum_{w=1}^{W} I_A^{[w,3]}(t) \qquad\qquad (2)$$

gegeben.

Der erste Ausgangsstrom an dem ersten Anschlußpol 15a, der zweite Ausgangsstrom an dem zweiten Anschlußpol 15b und der dritten Ausgangsstrom an dem dritten Anschlußpol 15c bereitgestellt. Die Anschlußpole 15a, 15b, 15c können bevorzugt als Anschlußkabel oder als Verbinder ausgebildet sein.

Die in der Figur 1 gezeigte Anschlußdose 7 umfaßt eine gemeinsame Regeleinrichtung 17, welche mit den Stellgliedern 13a-13c, 13a'-13c' und 13a"-13c" der drei Wandlervorrichtungen 9a, 9b, 9c über die Steuerleitungen 19 verbunden ist. Es versteht sich, daß die Stellglieder auch mittels einer einzigen seriellen Steuerleitung miteinander und mit der Regeleinrichtung 17 verbunden sein können. Wie zu Figur 1 beschrieben kann die Regeleinrichtung einen gewünschten Ausgangsstrom $I_G^n(t)$ bzw. eine gewünschte Ausgangsspannung $U_G^n(t)$, welcher bzw. welche an dem zugeordneten Anschlußpol anliegen soll, speichern. Gemäß den in der Regeleinrichtung 17 gespeicherten vorbestimmten Werten konvertieren die Stellglieder 13a-13c, 13a'-13c' und 13a"-13c" die durch die Solarzellengruppen 4a, 4b, 4c des Solarmoduls 3 erzeugten Eingangsströme zu zugehörigen Ausgangsströmen $I_A^{[1]}(t)$, $I_A^{[2]}(t)$, $I_A^{[3]}(t)$, welche den gewünschten Ausgangsströmen $I_G^{[1]}(t)$, $I_G^{[2]}(t)$, $I_G^{[3]}(t)$ entsprechen. Entsprechend können die von dem Solarmodul 3 erzeugten Eingangsspannungen zu zugehörigen Ausgangsspannungen konvertiert werden, welche den gewünschten Ausgangsspannungen entsprechen.

Bevorzugt kann in der Regeleinrichtung 17 die Strom-Spannungs-Kennlinie zumindest einer der Solarzellengruppen 4a, 4b, 4c gespeichert sein. Weiter kann die Regeleinrichtung 17 mittels einer Schnittstelle 21 mit einer externen Steuereinrichtung (nicht gezeigt) verbindbar sein. Die Regeleinrichtung 17 kann vorzugsweise auch einen Mikroprozessor, ein Stromquelle sowie zur Erfassung aktueller Betriebsparameter eine Strommeßeinrichtung und/oder eine Spannungsmeßeinrichtung und/oder eine Temperaturmeßeinrichtung (jeweils nicht gezeigt) umfassen.

Bevorzugt kann mittels der Regeleinrichtung 17 und den Stellglieder 13a-13c, 13a'-13c' und 13a"-13c" der Wandlervorrichtungen 9a, 9b, 9c ein Dreiphasenwechselstrom an den Anschlußpolen 15a, 15b, 15c der Anschlußdose 7 bereitgestellt werden.

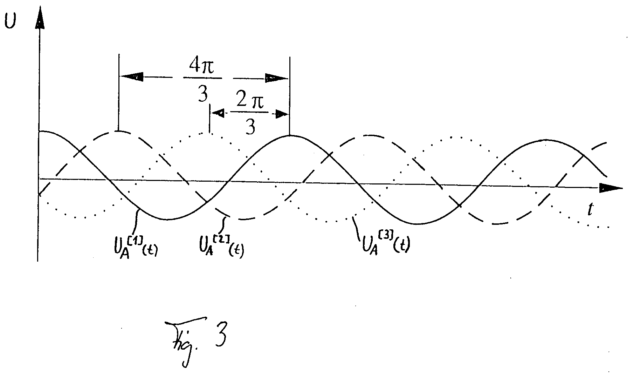

**Figur 3** zeigt eine beispielhafte Dreiphasenspannung, welche drei identische sinusförmige, zueinander um 120° phasenverschobene Ausgangsspannungen $U_A^{[1]}(t)$, $U_A^{[2]}(t)$ und $U_A^{[3]}(t)$ umfaßt. Die Ausgangsspannungen weisen eine Periode T von vorzugsweise 20 Millisekunden auf. Mit anderen Worten ist die dritte Ausgangsspannung $U_A^{[3]}(t)$ gegenüber der ersten Ausgangsspannung $U_A^{[1]}(t)$ um eine Phase von 120 Grad oder um den $2\pi/3$-ten Teil der Periode T verschoben. Die zweite Ausgangsspannung $U_A^{[2]}(t)$ ist entsprechend gegenüber der ersten Ausgangsspannung $U_A^{[1]}(t)$ um eine Phase von 240 Grad oder um den $4\pi/3$-ten Teil der Periode T verschoben. Die Ausgangsspannungen können vorzugsweise jeweils eine Spannungsamplitude von etwa 220V aufweisen, während zwischen zwei beliebigen Phasen der Dreiphasenspannung, d.h. zwischen zwei beliebigen Ausgangsspannungen, eine Spannung von etwa 380 Volt anliegen kann.

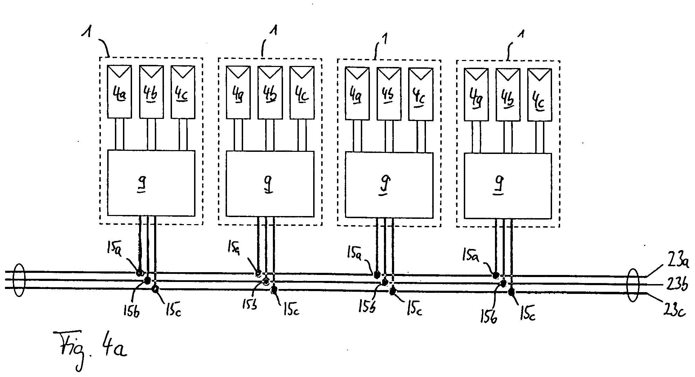

**Figur 4a** zeigt eine beispielhafte Anordnung einer Mehrzahl von gleichartigen Solarpaneelen 1, welche jeweils eine Mehrzahl von Solarzellengruppen 4a, 4b, 4c aufweist. Die von den Solarzellengruppen 4a, 4b, 4c erzeugte elektrische Leistung wird jeweils in Form eines Eingangsstroms der zumindest einen Wandlervorrichtung 9 des Solarpaneels 1 zur Verfügung gestellt, welche diesen zu drei vorbestimmbaren Ausgangsströmen, bevorzugt zu Wechselströmen, konvertiert, welche an den Anschlußpolen 15a, 15b, 15c des Solarpaneels 1 bereitgestellt werden. Die Mehrzahl von Solarpaneelen 1 ist mittels ihrer Anschlußpole 15a, 15b, 15c über drei Leitungen 23a, 23b, 23c, welche den drei Anschlußpolen 15a, 15b, 15c zugeordnet sind, miteinander elektrisch verbunden, wobei ein elektrischer Verbraucher an die Leitungen 23a, 23b, 23c anschließbar ist, um den Verbraucher mit elektrischer Energie zu versorgen.

Die Mehrzahl von Solarpaneelen 1 ist vorzugsweise miteinander synchronisiert, so daß sich die an den Anschlußpolen 15a, 15b, 15c in der zugeordneten Leitung 23a, 23b, 23c verstärkend überlagern. Bevorzugt sind die Ausgangsströme, welche an den über die erste Leitung 23a verbundenen ersten Anschlußpolen 15a der Solarpaneele bereitgestellt sind, in Phase also zueinander ohne Phasenverschiebung. Analog sind bevorzugt auch die an den zweiten Anschlußpolen 15b und/oder dritten Anschlußpolen 15c bereitgestellten Ausgangsströme miteinander in Phase. Die zeitliche Synchronisation bzw. die Phasensynchronisation der Ausgangsströme kann beispielsweise über eine Synchronisationsleitung erfolgen, welche die Regeleinrichtungen der Wandlervorrichtungen 9 miteinander und/oder mit einer externen Steuereinrichtung verbindet. Die Synchronisation kann auch über eine oder mehrere der Leitungen 23a, 23b, 23c erfolgen, welche die Solarpaneele miteinander verbindet. Über diese Leitungen 23a, 23b, 23c können beispielsweise Steuersignale für die Regeleinrichtungen der Wandlervorrichtungen 9 übertragen werden und/oder die Regeleinrichtungen erfassen den bereits in den Leitungen 23a, 23b, 23c fließenden Strom und erzeugen einen dazu synchronen Ausgangsstrom.

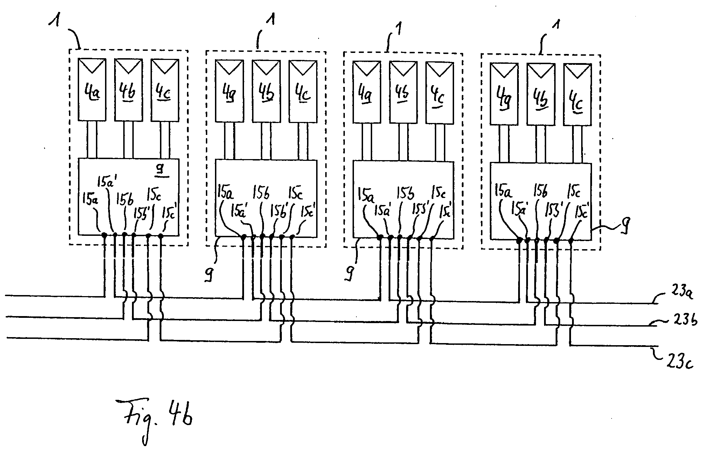

**Figur 4b** zeigt eine weitere beispielhafte Anordnung einer Mehrzahl von gleichartigen Solarpaneelen 1, welche bis auf die Konfiguration der Anschlußpole analog zu der in Figur 4a gezeigten Ausführungsform aufgebaut ist, wobei die Bauteile, welche den in der Figur 4a gezeigten Bauteilen entsprechen mit gleichen Bezugszeichen versehen sind. Die von den Solarzellengruppen 4a, 4b, 4c erzeugte elektrische Leistung wird konvertiert und an den Anschlußpolen 15a, 15a', 15b, 15b', 15c, 15c' der Solarpaneele 1 bereitgestellt. Die Mehrzahl von Solarpaneelen 1 ist mittels ihrer Anschlußpole 15a, 15a', 15b, 15b', 15c, 15c' über drei Leitungen 23a, 23b, 23c, welche den Anschlußpolen 15a, 15a', 15b, 15b', 15c, 15c' zugeordnet sind, miteinander elektrisch verbunden. Der Strom einer der Leitungen 23a, 23b, 23c fließt über einen der zugeordneten Anschlußpole 15a, 15b, 15c in eine der Wandlervorrichtungen 9 eines der Solarpaneele 1 hinein und über einen anderen der zugeordneten Anschlußpole 15a', 15b', 15c' wieder aus der Wandlervorrichtung 9 hinaus. Mit anderen Worten fließt der gesamte in einer der Leitungen 23a, 23b, 23c fließende Strom über die Wandlervorrichtung 9. Die einzelnen Wandlervorrichtungen 9 der Solarpaneele 1 sind also mittels der Leitungen 23a, 23b, 23c in Reihe geschaltet.

An die Leitungen 23a, 23b, 23c kann dann ein Verbraucher angeschlossen werden. Die Synchronisation der Mehrzahl von Solarpaneelen 1 kann wie zur Figur 4a beschrieben erfolgen. Durch die Reihenschaltung können vorteilhafterweise Ausgangsspannungen, die von den einzelnen Solarpaneelen 1 erzeugt werden, derart addiert werden, daß insbesondere auch Spannungen von etwa 110 Volt oder etwa 230 Volt an den Leitungen 23a, 23b, 23c bereitgestellt werden können.

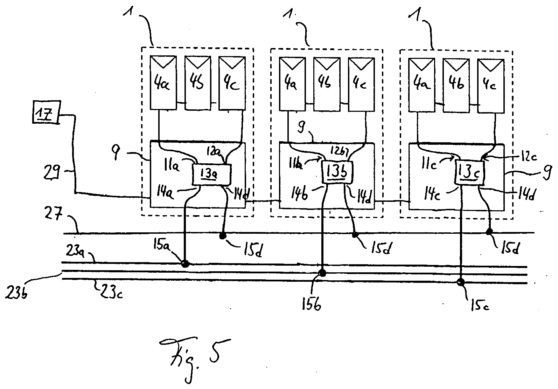

**Figur 5** zeigt eine beispielhafte Anordnung von drei Solarpaneelen 1, welche jeweils eine Mehrzahl von Solarzellengruppen 4a, 4b, 4c aufweisen. Die von den Solarzellengruppen 4a, 4b, 4c erzeugte elektrische Leistung wird jeweils in Form eines Eingangsstroms dem jeweiligen Stellglied 13a, 13b, 13c der Wandlervorrichtung 9 eines der Solarpaneele 1 zur Verfügung gestellt.

Jedes Stellglied umfaßt einen ersten elektrischen Leiterkontakt 11 a, 11 b, 11 c, einen zweiten elektrischen Leiterkontakt 12a, 12b, 12c, einen Anschlußpolkontakt 14a, 14b, 14c und einen Nulleiterpolkontakt 14d. Die ersten elektrischen Leiterkontakte 11 a, 11 b, 11 c und die zweiten elektrischen Leiterkontakte 12a, 12b, 12c der Stellglieder sind jeweils mit den zugehörigen Solarzellengruppen 4a, 4b, 4c der Solarpaneele 1 elektrisch verbunden.

Der Anschlußpolkontakt 14a, 14b, 14c jedes Stellglieds 13a, 13b, 13c ist jeweils mit einem einzigen Anschlußpol 15a, 15b, 15c des Solarpaneels 1 elektrisch verbunden. Der Nulleiterpolkontakt 14d jedes Stellglieds 13a, 13b, 13c ist mit dem Nulleiterpol 15d des Solarpaneels 1 elektrisch verbunden. Die Nulleiterpole 15d der einzelnen Solarpaneele 1 sind über einen Nulleiter 27 miteinander elektrisch verbunden.

Jede Wandlervorrichtung 9 und damit jedes Stellglied 13a, 13b, 13c ist mit einer Regeleinrichtung 17 verbunden, welche extern oder intern sein kann. Beispielsweise können alle Wandlervorrichtungen 9 über eine serielle Regelleitung 29 miteinander verbunden sein. Die von den Solarzellengruppen 4a, 4b, 4c erzeugte elektrische Leistung wird von den Stellgliedern 13a, 13b, 13c zu drei durch die Regeleinrichtung 17 vorbestimmbaren Ausgangsströmen, bevorzugt zu Wechselströmen, konvertiert, welche an den Anschlußpolen 15a, 15b, 15c des zugehörigen Solarpaneels 1 bereitgestellt werden. Die Solarpaneele 1 sind mittels ihrer Nulleiterpole 15d über den Nulleiter 27 miteinander elektrisch verbunden. Dadurch werden die an den Anschlußpolen 15a, 15b, 15c bereitgestellten Ausgangsspannungen gegen ein gemeinsames Referenzpotential im Nulleiter in Beziehung gesetzt.

Die Solarpaneele 1 sind vorzugsweise miteinander synchronisiert, so daß die an den Anschlußpolen 15a, 15b, 15c bzw. in den damit kontaktierten Leitungen 23a, 23b, 23c bereitgestellte Ausgangsspannung in der Phase zueinander verschoben sind, bevorzugt um eine Phase von 120 Grad. Die zeitliche Synchronisation bzw. Regelung der Phasenverschiebung der Ausgangsströme kann mittels der Regeleinrichtung 17 erfolgen. Der an den Leitungen 23a, 23b, 23c und dem Nulleiter 27 anliegende Dreiphasenwechselstrom kann einem Verbraucher bereitgestellt werden.

Bezugszeichenliste

| 1 | Solarpaneel |
| 3 | Solarmodul |
| 4a-4c | Solarzellengruppen des Solarmoduls 3 |
| 5a-5f | elektrischer Leiter des Solarmoduls 3 |

| 7 | Anschlußdose |
|---|---|
| 9a-9c | Wandlervorrichtung |
| 11a-11 c | erster Leiterkontakt |
| 12a-12c | zweiter Leiterkontakt |
| 13a-13c | Stellglied |
| 15a-15c | Anschlußpol |
| 15a'-15c' | Anschlußpol |
| 17 | Regeleinrichtung |
| 19 | Steuerleitung |
| 21 | Schnittstelle |
| 23a-23c | Leitung |
| 25 | Mikroprozessor |
| 27 | Nulleiter |
| 29 | Regelleitung |

## Patentansprüche

1. Anschlußdose (7) für ein Solarmodul (3), wobei die Anschlußdose (7) drei Anschlußpole (15a, 15b, 15c) und zumindest eine Wandlervorrichtung (9) aufweist, wobei die zumindest eine Wandlervorrichtung (9)

- drei Stellglieder (13a, 13b, 13c),
wobei jedes der drei Stellglieder (13a, 13b, 13c) einen ersten elektrischen Leiterkontakt (11 a, 11 b, 11 c), einen zweiten elektrischen Leiterkontakt (12a, 12b, 12c) und einen Anschlußpolkontakt (14a, 14b, 14c) aufweist, wobei jeder der ersten elektrischen Leiterkontakte (11 a, 11 b, 11 c) und jeder der zweiten elektrischen Leiterkontakte (12a, 12b, 12c) mit einem zugeordneten elektrischen Leiter (5a, 5b) des Solarmoduls (3) elektrisch kontaktierbar ist, und
wobei jeder der drei Anschlußpolkontakte (14a, 14b, 14c) mit einem zugeordneten Anschlußpol (15a, 15b, 15c) elektrisch verbunden ist;
- eine Regeleinrichtung (17), welche mit jedem der drei Stellglieder (13a, 13b, 13c) elektrisch verbunden ist, wobei das n-te der drei Stellglieder (13a, 13b, 13c) mit $n \in [1...3]$ einen über eine Zeit t vorgegebenen elektrischen Eingangsstrom $I_E^n(t)$ in einen durch die Regeleinrichtung (17) vorbestimmbaren zeitlich variablen Ausgangsstrom $I_A^n(t)$ konvertiert, welcher an dem n-ten Anschlußpol (15a, 15b, 15c) bereitstellbar ist, wobei der n-te Anschlußpol (15a, 15b, 15c) dem n-ten Stellglied zugeordnet ist und
wobei der Eingangsstrom $I_E^n(t)$ über die ersten (11 a, 11 b, 11 c) und zweiten (12a, 12b, 12c) elektrischen Leiterkontakte dem n-ten der drei Stellglieder (13a, 13b, 13c) zugeführt wird,
oder
wobei das n-te der drei Stellglieder (13a, 13b, 13c) mit $n \in [1...3]$ eine über die Zeit t vorgegebene elektrische Eingangsspannung $U_E^n(t)$ in eine durch die Regeleinrichtung (17) vorbestimmbare zeitlich variable Ausgangsspannung $U_A^n(t)$ konvertiert, welche an dem n-ten Anschlußpol (15a, 15b, 15c) bereitstellbar ist, wobei der n-te Anschlußpol (15a, 15b, 15c) dem n-ten Stellglied zugeordnet ist und
wobei die Eingangsspannung $U_E^n(t)$ über die ersten (11 a, 11 b, 11 c) und zweiten (12a, 12b, 12c) elektrischen Leiterkontakte an dem n-ten der drei Stellglieder (13a, 13b, 13c) anliegt,

umfaßt.

2. Anschlußdose (7) nach Anspruch 1, wobei die Summe der zeitlich variablen Ausgangsströme $I_A^n(t)$ zu jedem Zeitpunkt gleich Null ist oder wobei die Summe der zeitlich variablen Ausgangsspannungen $U_A^n(t)$ zu jedem Zeitpunkt gleich Null ist.

3. Anschlußdose (7) nach einem der vorigen Ansprüche, wobei die zeitlich variablen Ausgangsströme $I_A^n(t)$ periodische Ströme, insbesondere Wechselströme, und/oder die zeitlich variablen Ausgangsspannungen $U_A^n(t)$ periodische Spannungen, insbesondere Wechselspannungen, sind.

4. Anschlußdose (7) nach Anspruch 3, wobei die zeitlich variablen Ausgangsströme $I_A^n(t)$ identische, periodische, zueinander um 120° phasenverschobene Ströme und/oder die zeitlich variablen Ausgangsspannungen $U_A^n(t)$ identische, periodische, zueinander um 120° phasenverschobene Spannungen sind.

5.  Anschlußdose (7) nach einem der vorigen Ansprüche, wobei die drei Stellglieder (13a, 13b, 13c) mittels der Regeleinrichtung (17) miteinander zeitlich synchronisierbar sind.

6.  Anschlußdose (7) nach einem der vorigen Ansprüche, wobei die Stellglieder (13a, 13b, 13c) Gleichstromsteller sind und/oder zumindest einen Metalloxid-Feldeffekttransistor umfassen.

7.  Anschlußdose (7) nach einem der vorigen Ansprüche, wobei die Regeleinrichtung (17) eine Schnittstelle (21) aufweist, so daß die Regeleinrichtung (17) mit einer externen Steuereinrichtung verbindbar ist.

8.  Anschlußdose (7) nach einem der vorigen Ansprüche, mit einer Mehrzahl von Wandlervorrichtungen (9a, 9b, 9c).

9.  Anschlußdose (7) nach Anspruch 8, wobei die Regeleinrichtungen der Wandlervorrichtungen (9a, 9b, 9c) zu einer einzigen Regeleinrichtung (17) zusammengefaßt sind.

10. Solarpaneel (1) umfassend:

    - zumindest ein Solarmodul (3) mit zumindest zwei elektrischen Leitern (5a, 5b) und
    - eine Anschlußdose (7) gemäß einem der vorigen Ansprüche, wobei jeder der ersten elektrischen Leiterkontakte (11 a, 11 b, 11 c) der Anschlußdose (7) und jeder der zweiten elektrischen Leiterkontakte (12a, 12b, 12c) mit einem zugeordneten elektrischen Leiter (5a, 5b) des Solarmoduls (3) elektrisch kontaktiert ist.

11. Verwendung einer Anschlußdose (7) gemäß einem der Ansprüche 1 bis 9, um einen elektrischen Verbraucher mit einem Solarmodul (3) zu kontaktieren, wobei jeder der ersten elektrischen Leiterkontakte (11 a, 11 b, 11 c) der Anschlußdose (7) und jeder der zweiten elektrischen Leiterkontakte (12a, 12b, 12c) mit einem zugeordneten elektrischen Leiter (5a-5d) des Solarmoduls (3) elektrisch kontaktiert ist und wobei der elektrische Verbraucher mit den Anschlußpolen (15a, 15b, 15c) der Anschlußdose (7) elektrisch verbunden ist.

12. Verfahren zum Erzeugen eines Dreiphasenstroms umfassend die folgenden Schritte:

    - Bereitstellen eines Solarpaneels (1) gemäß Anspruch 10;
    - Vorbestimmen eines zeitlich variablen Ausgangsstroms $I_A^n(t)$ und/oder einer zeitlich variablen Ausgangsspannung $U_A^n(t)$;
    - Bereitstellen des vorbestimmten Ausgangsstroms $I_A^n(t)$ und/oder der Ausgangsspannung $U_A^n(t)$ an einer Regeleinrichtung (17) des Solarpaneels (1);
    - Regeln der Stellglieder (13a, 13b, 13c) des Solarpaneels (1) mittels der Regeleinrichtung (17), wobei jedes der Stellglieder (13a, 13b, 13c) einen vorgegebenen elektrischen Eingangsstrom in einen durch die Regeleinrichtung vorbestimmten zeitlich variablen Ausgangsstrom konvertiert, welcher an einem zugeordneten Anschlußpol (15a, 15b, 15c) bereitgestellt wird
    oder
    wobei jedes der Stellglieder (13a, 13b, 13c) eine vorgegebene elektrische Eingangsspannung in eine durch die Regeleinrichtung vorbestimmte zeitlich variable Ausgangsspannung konvertiert, welche an einem zugeordneten Anschlußpol (15a, 15b, 15c) bereitgestellt wird.

**Claims**

1.  A connection socket (7) for a solar module (3), wherein the connection socket (7) has three connection poles (15a, 15b, 15c) and at least one converter device (9), wherein at least one converter device (9) comprises

    - three control elements (13a, 13b, 13c),
    wherein each of the three control elements (13a, 13b, 13c) has a first electrical conductor contact (11a, 11b, 11c), a second electrical conductor contact (12a, 12b, 12c) and a connection pole contact (14a, 14b, 14c),
    wherein each of the first electrical conductor contacts (11a, 11b, 11c) and each of the second electrical conductor contacts (12a, 12b, 12c) is electrically contactable with an associated electrical conductor (5a, 5b) of the solar module (3) and
    wherein each of the three connection pole contacts (14a, 14b, 14c) is electrically connected with an associated connection pole (15a, 15b, 15c),

- a regulation apparatus (17), which is electrically connected with each of the three control elements (13a, 13b, 13c),

wherein the n-th of the three control elements (13a, 13b, 13c) with $n \, \varepsilon \, [1...3]$ converts an electrical input current $I_E^n(t)$ specified over time t into a temporally variable output current $I_A^n(t)$ predeterminable by the regulation apparatus (17), which can be provided at the n-th connection pole (15a, 15b, 15c),

wherein the n-th connection pole (15a, 15b, 15c) is assigned to the n-th control element and

wherein the input current $I_E^n(t)$ is supplied to the n-th of the three control elements (13a, 13b, 13c) via the first (11a, 11b, 11c) and second (12a, 12b, 12c) electrical conductor contacts,

or

wherein the n-th of the three control elements (13a, 13b, 13c) with $n \, \varepsilon \, [1...3]$ converts an electrical input voltage $U_E^n(t)$ specified over time t into a temporally variable output voltage $U_A^n(t)$ predeterminable by the regulation apparatus (17), which can be provided at the n-th connection pole (15a, 15b, 15c),

wherein the n-th connection pole (15a, 15b, 15c) is assigned to the n-th control element and

wherein the input voltage $U_E^n(t)$ is applied to the n-th of the three control elements (13a, 13b, 13c) via the first (11a, 11b, 11c) and second (12a, 12b, 12c) electrical conductor contacts.

2. The connection socket (7) according to claim 1, wherein the sum of the temporally variable output currents $I_A^n(t)$ at any point in time is equal to zero or wherein the sum of the temporally variable output voltages $U_A^n(t)$ at any point in time is equal to zero.

3. The connection socket (7) according to one of the previous claims, wherein the temporally variable output currents $I_A^n(t)$ are periodic currents, in particular alternating currents, and/or the temporally variable output voltages $U_A^n(t)$ are periodic voltages, in particular alternating current voltages.

4. The connection socket (7) according to claim 3, wherein the temporally variable output currents $I_A^n(t)$ are identical periodic currents that are phase-shifted by 120° relative to each other, and/or the temporally variable output voltages $U_A^n(t)$ are identical periodic voltages that are phase-shifted by 120° relative to each other.

5. The connection socket (7) according to one of the previous claims, wherein the three control elements (13a, 13b, 13c) can be temporally synchronized with each other by means of the regulation apparatus (17).

6. The connection socket (7) according to one of the previous claims, wherein the control elements (13a, 13b, 13c) are DC choppers and/or comprise at least one metal oxide field-effect transistor.

7. The connection socket (7) according to one of the previous claims, wherein the regulation apparatus (17) has an interface (21) so that the regulation apparatus (17) can be connected with an external control apparatus.

8. The connection socket (7) according to one of the previous claims, with a plurality of converter devices (9a, 9b, 9c).

9. The connection socket (7) according to claim 8, wherein the regulation apparatus (17) apparatuses of the converter devices (9a, 9b, 9c) are combined into a single regulation regulation apparatus (17).

10. A solar panel (1) comprising:

- at least one solar module (3) with at least two electrical conductors (5a, 5b) and
- a connection socket (7) according to one of the previous claims, wherein each of the first electrical conductor contacts (11a, 11b, 11c) of the connection socket (7) and each of the second electrical conductor contacts (12a, 12b, 12c) is electrically contacted with an associated electrical conductor (5a, 5b) of the solar module (3).

11. A use of a connection socket (7) according to one of claims 1 to 9, in order to contact an electrical consumer with a solar module (3),

wherein each of the first electrical conductor contacts (11a, 11b, 11c) of the connection socket (7) and each of the second electrical conductor contacts (12a, 12b, 12c) is electrically contacted with an associated electrical conductor (5a-5d) of the solar module (3) and

wherein the electrical consumer is electrically connected with the connection poles (15a, 15b, 15c) of the connection socket (7).

12. A method for generating a three-phase current comprising the following steps:

- providing a solar panel (1) according to claim 10;
- predetermining a temporally variable output current $I_A^n(t)$ and/or a temporally variable output voltage $U_A^n(t)$;
- providing the predetermined output current $I_A^n(t)$ and/or the output voltage $U_A^n(t)$ on a regulation apparatus (17) of the solar panel (1);
- regulating the control elements (13a, 13b, 13c) of the solar panel (1) by means of the regulation apparatus (17),

wherein each of the control elements (13a, 13b, 13c) converts a specified electrical input current into a temporally variable output current predetermined by the regulation apparatus (17) apparatus, which is provided on an associated connection pole (15a, 15b, 15c)

or

wherein each of the control elements (13a, 13b, 13c) converts a specified electrical input voltage into a temporally variable output voltage predetermined by the regulation apparatus (17) apparatus, which is provided on an associated connection pole (15a, 15b, 15c).


## Revendications

1. Boîtier de raccordement (7) pour un module solaire (3), auquel cas le boîtier de raccordement (7) présente trois pôles de raccordement (15a, 15b, 15c) et au moins un dispositif transducteur (9), auquel cas le au moins un dispositif transducteur (9) comporte

   - trois actionneurs (13a, 13b, 13c),
   auquel cas chacun des trois actionneurs (13a, 13b, 13c) présente un premier contact conducteur électrique (11a, 11b, 11c), un deuxième contact conducteur électrique (12a, 12b, 12c) et un contact de pôle de raccordement (14a, 14b, 14c), auquel cas chacun des premiers contacts conducteurs électriques (11a, 11b, 11c) et chacun des deuxièmes contacts conducteurs électriques (12a, 12b, 12c) est susceptible de pouvoir être connecté électriquement à un conducteur électrique associé (5a, 5b) du module solaire (3), et auquel cas chacun des trois contacts du pôle de raccordement (14a, 14b, 14c) est relié électriquement avec un pôle de raccordement associé (15a, 15b, 15c) ;
   - un dispositif régulateur (17) qui est relié électriquement avec chacun des trois actionneurs (13a, 13b, 13c), auquel cas le ne des trois actionneurs (13a, 13b, 13c) avec $n \in [1...3]$ convertit un courant d'entrée électrique $I_E^n(t)$ prédéterminé pendant une période t en un courant de sortie variable dans le temps $I_A^n(t)$ pouvant être prédéterminé par le dispositif régulateur (17), ce courant de sortie étant mis à disposition au niveau du ne pôle de raccordement (15a, 15b, 15c),
   auquel cas le $n^e$ pôle de raccordement (15a, 15b, 15c) est associé à le $n^e$ actionneur et auquel cas le ne des trois actionneurs (13a, 13b, 13c) est alimenté en courant d'entrée $I_E^n(t)$ à l'aide des premiers (11a, 11b, 11c) et des deuxièmes (12a, 12b, 12c) contacts conducteurs électriques au,
   ou
   auquel cas le ne des trois actionneurs (13a, 13b, 13c) avec $n \in [1...3]$ convertit une tension d'entrée électrique $U_E^n(t)$ prédéterminée pendant une période t en une tension de sortie variable dans le temps $U_A^n(t)$ pouvant être prédéterminée par le dispositif régulateur (17), cette tension de sortie pouvant être mis à disposition au niveau du ne pôle de raccordement (15a, 15b, 15c),
   auquel cas le $n^e$ pôle de raccordement (15a, 15b, 15c) est associé à le $n^e$ actionneur et
   auquel cas la tension d'entrée $U_E^n(t)$ est connectée par l'intermédiaire des premiers (11a, 11b, 11c) et des deuxièmes (12a, 12b, 12c) contacts conducteurs électriques au ne des trois actionneurs (13a, 13b, 13c).

2. Boîtier de raccordement (7) selon la revendication 1, auquel cas la somme des courants de sortie variables dans le temps $I_A^n(t)$ est égale à zéro à tout moment ou auquel cas la somme des tensions de sortie variables dans le temps $U_A^n(t)$ est égale à zéro à tout moment.

3. Boîtier de raccordement (7) selon l'une quelconque des revendications précédentes, auquel cas les courants de sortie variables dans le temps $I_A^n(t)$ sont des courants périodiques, en particulier des courants alternatifs, et/ou les tensions de sortie variables dans le temps $U_A^n(t)$ sont des tensions périodiques, en particulier des tensions alternatives.

4. Boîtier de raccordement (7) selon la revendication 3, auquel cas les courants de sortie variables dans le temps $I_A^n(t)$ sont des courants identiques, périodiques mutuellement déphasés de 120°, et/ou les tensions de sortie variables dans le temps $U_A^n(t)$ sont des tensions identiques, périodiques mutuellement déphasées de 120°.

**5.** Boîtier de raccordement (7) selon l'une quelconque des revendications précédentes, auquel cas les trois actionneurs (13a, 13b, 13c) peuvent être mutuellement synchronisés temporellement à l'aide du dispositif régulateur (17).

**6.** Boîtier de raccordement (7) selon l'une quelconque des revendications précédentes, auquel cas les actionneurs (13a, 13b, 13c) sont des hacheurs de courant et/ou comportent au moins un transistor à effet de champ en oxyde métallique.

**7.** Boîtier de raccordement (7) selon l'une quelconque des revendications précédentes, auquel cas le dispositif régulateur (17) présente une interface (21), de sorte que le dispositif régulateur (17) est susceptible d'être relié à un dispositif de commande extérieur.

**8.** Boîtier de raccordement (7) selon l'une quelconque des revendications précédentes, avec une multitude de dispositifs transducteurs (9a, 9b, 9c).

**9.** Boîtier de raccordement (7) selon la revendication 8, auquel cas les dispositifs régulateurs des dispositifs transducteurs (9a, 9b, 9c) sont regroupés en un seul dispositif régulateur (17).

**10.** Panneau solaire (1) comportant:

- au moins un module solaire (3) avec au moins deux conducteurs électriques (5a, 5b) et
- un boîtier de raccordement (7) selon l'une quelconque des revendications précédentes, auquel cas chacun des premiers contacts conducteurs électriques (11a, 11b, 11c) du boîtier de raccordement (7) et chacun des deuxièmes contacts conducteurs électriques (12a, 12b, 12c) est connecté électriquement à un conducteur électrique associé (5a, 5b) du module solaire (3).

**11.** Utilisation d'un boîtier de raccordement (7) selon l'une quelconque des revendications précédentes de 1 à 9 afin de connecter un consommateur électrique à un module solaire (3), auquel cas chacun des premiers contacts conducteurs électriques (11a, 11b, 11c) du boîtier de raccordement (7) et chacun des deuxièmes contacts conducteurs électriques (12a, 12b, 12c) est connecté électriquement à un conducteur électrique associé (5a-5d) du module solaire (3) et auquel cas le consommateur électrique est relié électriquement avec les pôles de raccordement (15a, 15b, 15c) du boîtier de raccordement (7).

**12.** Procédé de production d'un courant triphasé comportant les étapes suivantes :

- mise à disposition du module solaire (1) conformément à la revendication 10 ;
- prédétermination d'un courant de sortie variable dans le temps $I_A^n(t)$ et/ou d'une tension de sortie variable dans le temps $U_A^n(t)$ ;
- mise à disposition du courant de sortie prédéterminé $I_A^n(t)$ et/ou de la tension de sortie $U_A^n(t)$ au niveau du dispositif régulateur (17) du module solaire (1) ;
- réglage des actionneurs (13a, 13b, 13c) du module solaire (1) à l'aide du dispositif régulateur (17), auquel cas chacun des actionneurs (13a, 13b, 13c) convertit un courant d'entrée électrique prédéterminé en un courant de sortie variable dans le temps prédéterminé par le dispositif régulateur, courant de sortie étant mis à disposition au niveau du pôle de raccordement associé (15a, 15b, 15c)
ou
auquel cas chacun des actionneurs (13a, 13b, 13c) convertit une tension d'entrée électrique prédéterminée en une tension de sortie variable dans le temps prédéterminée par le dispositif régulateur, cette tension de sortie étant mise à disposition au niveau du pôle de raccordement associé (15a, 15b, 15c).

Fig. 1

Fig. 2

Fig. 3

Fig. 4a

EP 2 395 556 B1

EP 2 395 556 B1

Fig. 46

Fig. 5

EP 2 395 556 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4032569 A1